# EUROPEAN PATENT APPLICATION

(11) **EP 4 585 817 A1**
(43) Date of publication of application: **16.07.2025**
(21) Application number: 23863175.8
(22) Date of filing: 05.09.2023
(51) Int. Cl.: F16C 17/04, F16J 15/34

(54) **SLIDING COMPONENT**

(30) Priority: 08.09.2022 JP 2022142932
(71) Applicant: Eagle Industry Co., Ltd., Minato-ku Tokyo 105-8587 (JP)
(72) Inventor: ONUMA, Minori, Tokyo 105-8587 (JP); MIYAZAKI, Sayaka, Tokyo 105-8587 (JP); SUZUKI, Hiroshi, Tokyo 105-8587 (JP); NEGISHI, Yuta, Tokyo 105-8587 (JP)
(74) Representative: WSL Patentanwälte Partnerschaft mbB
(86) International application number: PCT/JP2023/032342
(87) International publication number: WO 2024/053637

(57) **Abstract**

There is provided a sliding component capable of suppressing mixing of a first fluid and a second fluid between sliding surfaces. In a sliding component in which sliding surfaces of a pair of sliding rings 10 and 20 rotate relative to each other and which partitions a first fluid space S1 and a second fluid space S2 off from each other, at least a sliding surface 11 includes a first storage groove 15 provided on a first fluid space S1 side, a second storage groove 16 provided spaced apart from the first storage groove 15 in a radial direction on a second fluid space S2 side of the first storage groove 15, a first dynamic pressure mechanism 13 that is provided on the first fluid space S1 side of the first storage groove 15, and that introduces a fluid from the first storage groove 15 to generate a dynamic pressure, and a second dynamic pressure mechanism 14 that is provided on the second fluid space S2 side of the second storage groove 16, and that introduces a fluid from the second storage groove 16 to generate a dynamic pressure.

## Description

### {TECHNICAL FIELD}

The present invention relates to a sliding component, for example, a sliding component used for a shaft seal or a bearing.

### {BACKGROUND ART}

As a sliding component that prevents a leakage of a sealed fluid around a rotating shaft of a rotating machine, for example, a mechanical seal including a pair of sliding rings having an annular shape which rotate relative to each other and of which sliding surfaces slide against each other has been known. In such a mechanical seal, in recent years, a reduction in energy loss caused by sliding has been desired for environmental measures and the like, and dynamic pressure generation grooves may be provided on a sliding surface of a sliding ring.

For example, in a sliding surface of one sliding ring of a mechanical seal described in Patent Citation 1, a first negative pressure generation groove and a dynamic pressure generation groove are provided on a radial inner side, and a second negative pressure generation groove is provided on a radial outer side. The first negative pressure generation groove is partitioned by an annular land not to communicate with a second fluid space on the radial outer side, and the second negative pressure generation groove is partitioned by an annular land not to communicate with a first fluid space on the radial inner side. The dynamic pressure generation groove is disposed on the radial inner side of the first negative pressure generation groove. In addition, one circumferential groove is formed between the first negative pressure generation groove and the second negative pressure generation groove, and another circumferential groove is formed between the first negative pressure generation groove and the dynamic pressure generation groove.

During relative forward rotation of a pair of the sliding rings, since a dynamic pressure is generated at a closed end of the dynamic pressure generation groove by the first fluid on the radial inner side, the sliding surfaces are slightly spaced apart from each other, and lubricity between the sliding surfaces is improved. In addition, the first fluid that has flowed out from the closed end of the dynamic pressure generation groove into a gap between the sliding surfaces is suctioned into the first negative pressure generation groove, and is discharged to the other circumferential groove. Further, the second fluid flowing from the second fluid space on the radial outer side into the gap between the sliding surfaces due to the sliding surfaces being spaced apart from each other is suctioned into the second negative pressure generation groove, and is returned to the second fluid space. Accordingly, while ensuring lubricity between the sliding surfaces, the first fluid is prevented from flowing into the second fluid space, or the second fluid is prevented from flowing into the first fluid space.

### {CITATION LIST}

### {Patent Literature}

Patent Citation 1: WO 2018/092742 A (Page 11, FIG. 3)

### {SUMMARY OF INVENTION}

### {Technical Problem}

In the mechanical seal as described in Patent Citation 1, the first fluid can be prevented from flowing into the second fluid space or the second fluid can be prevented from flowing into the first fluid space; however, the first fluid that has passed across the first negative pressure generation groove in a radial direction or the second fluid that has passed across the second negative pressure generation groove in the radial direction are mixed with each other in one circumferential groove provided between the first negative pressure generation groove and the second negative pressure generation groove between the sliding surfaces, which is a risk.

The present invention has been made in view of such problems, and an object of the present invention is to provide a sliding component capable of suppressing mixing of a first fluid and a second fluid between sliding surfaces.

### {Solution to Problem}

In order to solve the foregoing problems, a sliding component according to the present invention is a sliding component in which sliding surfaces of a pair of sliding rings rotate relative to each other and which partitions a first fluid space and a second fluid space off from each other, wherein at least one of the sliding surfaces includes: a first storage groove provided on a first fluid space side, and extending in a circumferential direction; a second storage groove provided spaced apart from the first storage groove in a radial direction on a second fluid space side of the first storage groove, and extending in the circumferential direction; a first dynamic pressure mechanism provided on the first fluid space side of the first storage groove, and being shallower in depth than the first storage groove; and a second dynamic pressure mechanism provided on the second fluid space side of the second storage groove, and being shallower in depth than the second storage groove. According to the first aspect, since the first fluid flowing across the first dynamic pressure mechanism toward the second fluid space side is collected in the first storage groove, and the second fluid flowing across the second dynamic pressure mechanism toward the first fluid space side is collected in the second storage groove, the mixing of a first fluid and a second fluid between the sliding surfaces is suppressed, and the first fluid and the second fluid are temporarily stored in the first storage groove and the second storage groove, respectively, in a state where the mixing thereof is prevented, so that a lubrication effect between the sliding surfaces can be improved. In addition, interference between a dynamic pressure generated by the first dynamic pressure mechanism and a dynamic pressure generated by the second dynamic pressure mechanism is suppressed by the first storage groove and the second storage groove provided spaced apart from each other.

It may be preferable that in at least one set of a combination of the first dynamic pressure mechanism and the first storage groove and a combination of the second dynamic pressure mechanism and the second storage groove, the dynamic pressure mechanism and the storage groove communicate with each other. According to this preferable configuration, the fluid is allowed to flow between a set of the dynamic pressure mechanism and the storage groove communicating with each other.

It may be preferable that at least one of the first storage groove and the second storage groove has an annular shape. According to this preferable configuration, the first fluid and the second fluid can be reliably collected over the entire circumference by the first storage groove and the second storage groove.

It may be preferable that at least one of a closed end of the first dynamic pressure mechanism which is inclined toward the first fluid space side, and a closed end of the second dynamic pressure mechanism which is inclined toward the second fluid space side, is formed. Accofrding to this preferable configuration, since the first fluid is led from the closed end of the first dynamic pressure mechanism to the first fluid space, and the second fluid is led from the closed end of the second dynamic pressure mechanism to the second fluid space, the first fluid can be efficiently returned to the first fluid space, and the second fluid can be efficiently returned to the second fluid space. In such a manner, the mixing of the first fluid and the second fluid can be further prevented, and the dynamic pressure generated by the first dynamic pressure mechanism and the dynamic pressure generated by the second dynamic pressure mechanism are less likely to interfere with each other.

It may be preferable that at least one of the first dynamic pressure mechanism and the second dynamic pressure mechanism includes a first direction groove extending toward a first side in the circumferential direction, and a second direction groove extending toward a second side opposed to the first side in the circumferential direction. According to this preferable configuration, since the one direction groove can be made to function during relative forward rotation of the sliding component, and the other direction groove can be made to function during relative reverse rotation of the sliding component, both rotations of the sliding component can be accommodated.

It may be preferable that the first direction groove and a second direction groove communicate with each other. According to this preferable configuration, the fluid is allowed to flow between the one direction groove and the other direction groove.

It may be preferable that a third dynamic pressure mechanism is provided on at least one of the first fluid space side of the first dynamic pressure mechanism and the second fluid space side of the second dynamic pressure mechanism. Accofrding to this preferable configuration, the sliding surfaces are easily made spaced apart from each other by the third dynamic pressure mechanism, lubrication performance is improved.

It may be preferable that an independent pressure release mechanism is provided between the first storage groove and the second storage groove. According to this preferable configuration, the dynamic pressure generated by the first dynamic pressure mechanism and the dynamic pressure generated by the second dynamic pressure mechanism are prevented from interfering with each other by the independent pressure release mechanism between the first storage groove and the second storage groove. In addition, since the first fluid or the second fluid that has passed across the first storage groove or the second storage groove in the radial direction can be collected by the independent pressure release mechanism between the first storage groove and the second storage groove, mixing of the first fluid and the second fluid can be further prevented.

According to a ninth aspect of the present invention, at least one of the first storage groove and the second storage groove has a circular annular shape. According to this preferable configuration, since no corner portion is formed in the first storage groove and the second storage groove, no dynamic pressure is generated during relative rotation, and the first fluid and the second fluid are easily stored in the first storage groove and the second storage groove.

It may be preferable that a plurality of the first dynamic pressure mechanisms are be provided on the first fluid space side, and the first storage groove is provided to correspond to each of the first dynamic pressure mechanisms. A plurality of the second dynamic pressure mechanisms are provided on the second fluid space side, and the second storage groove is provided to correspond to each of the second dynamic pressure mechanisms. According to this preferable configuration, interference between the dynamic pressure generated by the first dynamic pressure mechanism and the dynamic pressure generated by the second dynamic pressure mechanism can be further suppressed.

### {BRIEF DESCRIPTION OF DRAWINGS}

FIG. 1 is a longitudinal sectional view illustrating one example of a mechanical seal including a sliding component according to a first embodiment of the present invention.
FIG. 2 is an enlarged view of main portions of a sliding surface of a stationary seal ring in the first embodiment when viewed in an axial direction.
FIG. 3 is an enlarged view of main portions of a sliding surface of a stationary seal ring included in a sliding component according to a second embodiment of the present invention when viewed in the axial direction.
FIG. 4 is an enlarged view of main portions of a sliding surface of a stationary seal ring included in a sliding component according to a third embodiment of the present invention when viewed in the axial direction.
FIG. 5 is an enlarged view of main portions of a sliding surface of a stationary seal ring included in a sliding component according to a fourth embodiment of the present invention when viewed in the axial direction.
FIG. 6 is an enlarged view of main portions of a sliding surface of a stationary seal ring included in a sliding component according to a fifth embodiment of the present invention when viewed in the axial direction.
FIG. 7 is an enlarged view of main portions of a sliding surface of a stationary seal ring included in a sliding component according to a sixth embodiment of the present invention when viewed in the axial direction.
FIG. 8 is an enlarged view of main portions of a sliding surface of a stationary seal ring included in a sliding component according to a seventh embodiment of the present invention when viewed in the axial direction.
FIG. 9 is a view of a sliding surface of a stationary seal ring included in a sliding component according to an eighth embodiment of the present invention when viewed in the axial direction.
FIG. 10 is an enlarged view of the sliding surface of the stationary seal ring when viewed in the axial direction during forward rotation of a rotating seal ring in the eighth embodiment.
FIG. 11 is an enlarged view of the sliding surface of the stationary seal ring when viewed in the axial direction during reverse rotation of the rotating seal ring in the eighth embodiment.
FIG. 12 is an enlarged view of main portions of a sliding surface of a stationary seal ring included in a sliding component according to a ninth embodiment of the present invention when viewed in the axial direction.
FIG. 13 is a view of a sliding surface of a stationary seal ring included in a sliding component according to a tenth embodiment of the present invention when viewed in the axial direction.
FIG. 14 is an enlarged view of main portions of a sliding surface of a stationary seal ring included in a sliding component according to an eleventh embodiment of the present invention when viewed in the axial direction.

### {DESCRIPTION OF EMBODIMENTS}

Modes for implementing a sliding component according to the present invention will be described below based on embodiments.

### {First embodiment}

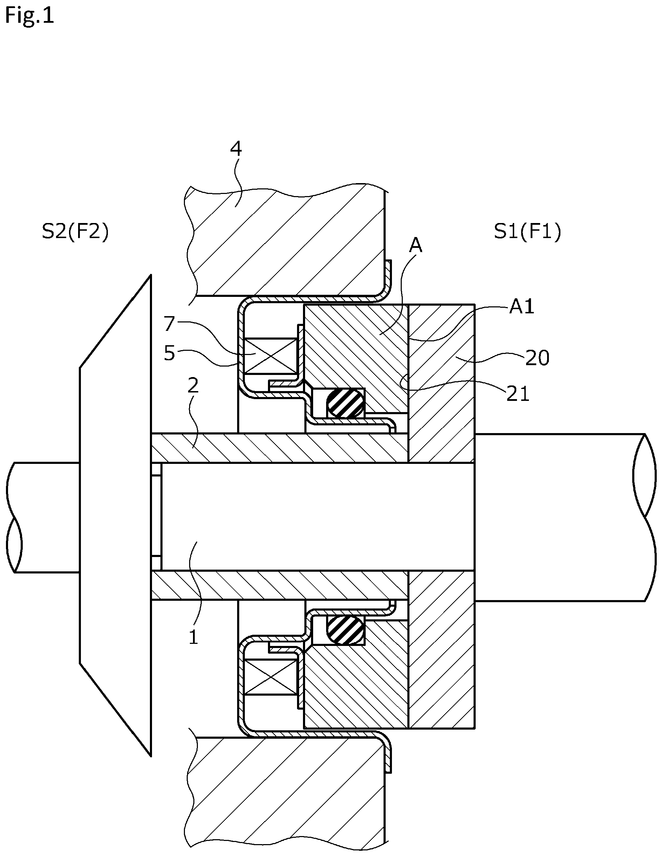

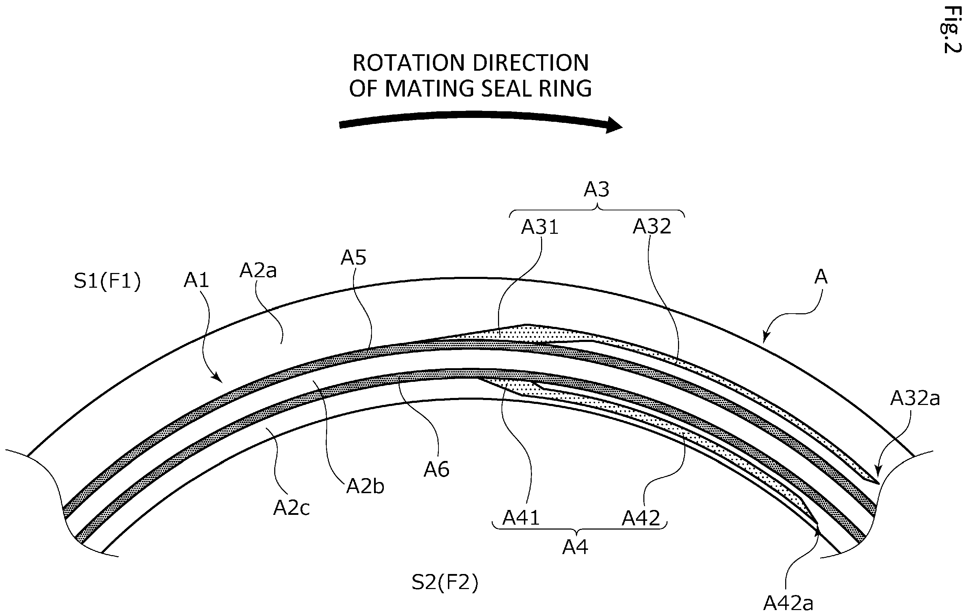

A sliding component according to a first embodiment of the present invention will be described with reference to FIGS. 1 and 2. Incidentally, in the present embodiment, a mechanical seal will be described as an example of the sliding component. The mechanical seal of the present embodiment is configured such that a first fluid F1, for example, oil or the like exists in an outer space S1 and a second fluid F2, for example, water or the like exists in an inner space S2, and prevents different types of the first fluid F1 and the second fluid F2 from mixing with each other. In addition, for convenience of description, in the drawings, dots may be added to grooves and the like formed on a sliding surface.

A mechanical seal illustrated in FIG. 1 is an inside mechanical seal that seals the first fluid F1 attempting to leak from a radial outer side toward a radial inner side of sliding surfaces. Namely, an example in which the first fluid F1 is at a higher pressure than the second fluid F2 will be described.

The mechanical seal mainly includes a stationary seal ring A and a rotating seal ring 20. The stationary seal ring A has a circular annular shape, and is provided on a seal cover 5, which is fixed to a housing 4 of an attached device, to be non-rotatable and movable in an axial direction. The rotating seal ring 20 has a circular annular shape, and is provided on a rotating shaft 1 via a sleeve 2 to be rotatable together with the rotating shaft 1. The stationary seal ring A is biased in the axial direction by an elastic member 7. A sliding surface A1 of the stationary seal ring A and a sliding surface 21 of the rotating seal ring 20 slide in close contact with each other. Incidentally, the sliding surface 21 of the rotating seal ring 20 is a flat surface, and a recessed portion such as a groove is not provided on the flat surface.

The stationary seal ring A and the rotating seal ring 20 are typically made of SiC (as an example of hard material) or a combination of SiC and carbon (as an example of soft material), but are not limited thereto, and any sliding material can be applied as long as the sliding material is used as a sliding material for mechanical seals. Incidentally, examples of SiC include sintered bodies using boron, aluminum, carbon, or the like as a sintering aid, and materials consisting of two or more phases with different components and compositions, such as SiC in which graphite particles are dispersed, reaction-sintered SiC consisting of SiC and Si, SiC-TiC, and SiC-TiN. As the carbon, carbon in which a carbonaceous substance and a graphitic substance are mixed, resin-molded carbon, sintered carbon, and the like can be used. In addition, in addition to the above-described sliding materials, metal materials, resin materials, surface modification materials (e.g., coating materials), composite materials, and the like can also be applied.

As illustrated in FIG. 2, the rotating seal ring 20 slides clockwise relative to the stationary seal ring A as indicated by a solid arrow. Hereinafter, the direction of the solid arrow will be described as a forward rotation direction of the rotating seal ring 20.

The sliding surface A1 of the stationary seal ring A is provided with a first pumping mechanism A3 serving as a first dynamic pressure mechanism, a second pumping mechanism A4 serving as a second dynamic pressure mechanism, a first annular groove A5 serving as a first storage groove, and a second annular groove A6 as a second storage groove, and the rest are land portions A2a, A2b, and A2c.

The first pumping mechanism A3 is a groove including an inclined groove portion A31 extending while inclining with a clockwise component from the radial inner side toward the radial outer side, and a circumferential groove portion A32 extending from a radial outer end of the inclined groove portion A31 in the forward rotation direction of the rotating seal ring 20.

In addition, the second pumping mechanism A4 is a groove including an inclined groove portion A41 extending while inclining with a clockwise component from the radial outer side toward the radial inner side, and a circumferential groove portion A42 extending from a radial inner end of the inclined groove portion A41 in the forward rotation direction of the rotating seal ring 20.

The first annular groove A5 is disposed on the radial inner side of the first pumping mechanism A3. The first annular groove A5 is formed concentrically with the sliding surface A1 of the stationary seal ring A. A radial inner end of the inclined groove portion A31 communicates with the first annular groove A5 in a radial direction.

Incidentally, the first annular groove A5 is formed with a constant depth in a circumferential direction, and a depth of the first annular groove A5 is deeper than a depth of the first pumping mechanism A3.

The second annular groove A6 is disposed adjacent to the radial outer side of the second pumping mechanism A4. The second annular groove A6 is formed concentrically with the sliding surface A1 of the stationary seal ring A. Incidentally, a radial width of the first annular groove A5 and a radial width of the second annular groove A6 may be the same dimension, or may be different dimensions. In addition, a radial outer end of the inclined groove portion A41 communicates with the second annular groove A6 in the radial direction.

Incidentally, the second annular groove A6 is formed with a constant depth in the circumferential direction, and a depth of the second annular groove A6 is deeper than a depth of the second pumping mechanism A4. Incidentally, the first annular groove A5 and the second annular groove A6 may have the same depth, or may have different depths.

Next, the flows of the first fluid F1 and the second fluid F2 during relative rotation between the stationary seal ring A and the rotating seal ring 20 will be briefly described. Incidentally, here, the description will be provided without specifying a relative rotation speed between the stationary seal ring A and the rotating seal ring 20.

First, when the rotating seal ring 20 is not in rotation and is stopped, the first fluid F1 flows into the first pumping mechanism A3 and the first annular groove A5, and the second fluid F2 flows into the second pumping mechanism A4 and the second annular groove A6.

In addition, since the land portion A2b is disposed between the first annular groove A5 and the second annular groove A6, the first fluid F1 and the second fluid F2 are less likely to mix with each other.

Incidentally, since the stationary seal ring A is biased toward a rotating seal ring 20 side by the elastic member 7, the sliding surfaces A1 and 21 are in contact with each other, and the first fluid F1 and the second fluid F2 are hardly mixed between the sliding surfaces A1 and 21.

When the rotating seal ring 20 rotates in the forward direction relative to the stationary seal ring A, in the first pumping mechanism A3 and the first annular groove A5, the first fluid F1 moves to follow the relative rotation of the rotating seal ring 20, and in the second pumping mechanism A4 and the second annular groove A6, the second fluid F2 moves to follow the relative rotation of the rotating seal ring 20.

Specifically, in the first pumping mechanism A3, the first fluid F1 moves from the radial inner end of the inclined groove portion A31 toward a closed end A32a of the circumferential groove portion A32. Accordingly, a slight positive pressure is generated at the closed end A32a and in the vicinity thereof.

Some of the first fluid F1 discharged from the closed end A32a and the vicinity thereof into a gap between the sliding surfaces A1 and 21 flows into the first annular groove A5.

Incidentally, since the closed end A32a has an acute angle on the radial outer side when viewed in the axial direction, some of the first fluid F1 discharged from the closed end A32a into the gap between the sliding surfaces A1 and 21 is easily guided to flow into the outer space S1.

In addition, in the second pumping mechanism A4, the second fluid F2 moves from the radial inner end of the inclined groove portion A41 toward a closed end A42a of the circumferential groove portion A42. Accordingly, a slight positive pressure is generated at the closed end A42a and in the vicinity thereof.

Some of the second fluid F2 discharged from the closed end A42a and the vicinity thereof into the gap between the sliding surfaces A1 and 21 flows into the second annular groove A6.

Incidentally, since the closed end A42a has an acute angle on the radial inner side when viewed in the axial direction, some of the second fluid F2 discharged from the closed end A42a into the gap between the sliding surfaces A1 and 21 is easily guided to flow into the inner space S2.

As described above, since the first fluid F1 flowing across the first pumping mechanism A3 toward an inner space S2 side is collected in the first annular groove A5, and the second fluid F2 flowing across the second pumping mechanism A4 toward an outer space S1 side is collected in the second annular groove A6, the mixing of the first fluid F1 and the second fluid F2 between the sliding surfaces A1 and 21 is suppressed, and the first fluid F1 and the second fluid F2 are temporarily stored in the first annular groove A5 and the second annular groove A6, respectively, in a state where the mixing thereof is prevented, so that a lubrication effect between the sliding surfaces A1 and 21 can be improved.

In addition, interference between the dynamic pressure generated by the first pumping mechanism A3 and the dynamic pressure generated by the second pumping mechanism A4 is suppressed by the first annular groove A5 and the second annular groove A6 provided spaced apart from each other.

In addition, the first pumping mechanism A3 and the first annular groove A5 communicate with each other, and the second pumping mechanism A4 and the second annular groove A6 communicate with each other. According to this configuration, the first fluid F1 and the second fluid F2 are allowed to flow between the first pumping mechanism A3 and the first annular groove A5 and between the second pumping mechanism A4 and the second annular groove A6, respectively.

In addition, since the first annular groove A5 and the second annular groove A6 have an endless annular shape, the first fluid F1 and the second fluid F2 can be reliably collected over the entire circumference.

In addition, since the closed end A32a of the first pumping mechanism A3 has an acute angle on the radial outer side when viewed in the axial direction, and the closed end A42a of the second pumping mechanism A4 has an acute angle on the radial inner side when viewed in the axial direction, the first fluid F1 can be efficiently returned to the outer space S1, and the second fluid F2 can be efficiently returned to the inner space S2. In such a manner, the mixing of the first fluid F1 and the second fluid F2 can be further prevented, and the dynamic pressure generated by the first pumping mechanism A3 and the dynamic pressure generated by the second pumping mechanism A4 are less likely to interfere with each other.

In addition, since the first annular groove A5 and the second annular groove A6 are provided spaced apart from each other in the radial direction, interference between the dynamic pressure generated by the first pumping mechanism A3 and the dynamic pressure generated by the second pumping mechanism A4 is further suppressed.

In addition, since the first annular groove A5 and the second annular groove A6 have an annular shape, and are concentrically disposed, the first fluid F1 and the second fluid F2 are easily stored in the first annular groove A5 and the second annular groove A6, respectively.

Incidentally, in the present embodiment, the mode in which the closed end A32a of the first pumping mechanism A3 has an acute angle on the radial outer side when viewed in the axial direction, and the closed end A42a of the second pumping mechanism A4 has an acute angle on the radial inner side when viewed in the axial direction has been provided as an example; however, the shapes of the closed ends of the first pumping mechanism and the second pumping mechanism may be freely changed.

For example, a radial inner side of the closed end of the first pumping mechanism and a radial outer side of the closed end of the second pumping mechanism may have an acute angle when viewed in the axial direction. In addition, the closed ends of the first pumping mechanism and the second pumping mechanism may be at a right angle, or may have an arcuate shape.

In addition, in the present embodiment, the mode in which a set of the first pumping mechanism A3 and the first annular groove A5 communicate with each other, and a set of the second pumping mechanism A4 and the second annular groove A6 communicate with each other have been provided as an example; however, each of both sets may not be in communication, or only one set may be in communication and the other set may not be in communication.

Incidentally, the shapes or volumes of the first pumping mechanism and the second pumping mechanism may be different.

In addition, the first pumping mechanism and the second pumping mechanism may be disposed to be shifted in phase from each other in the circumferential direction.

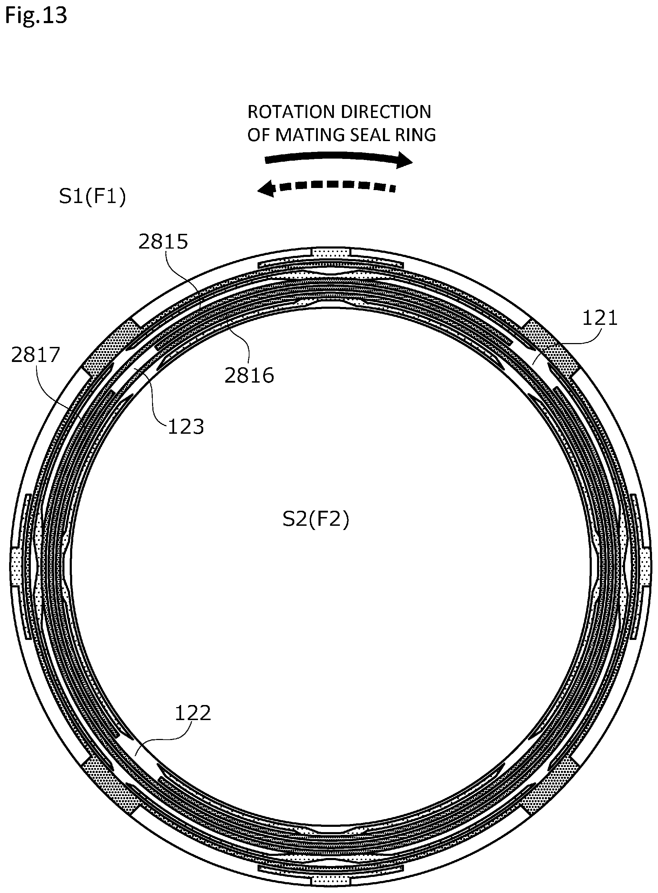

In addition, the first storage groove and the second storage groove are not limited to having a circular annular shape when viewed in the axial direction, and may be, for example, polygonal or wavy annular grooves when viewed in the axial direction, or may have a C shape or may be composed of a plurality of arcuate grooves disposed in the circumferential direction as illustrated in FIG. 13 to be described later.

### {Second embodiment}

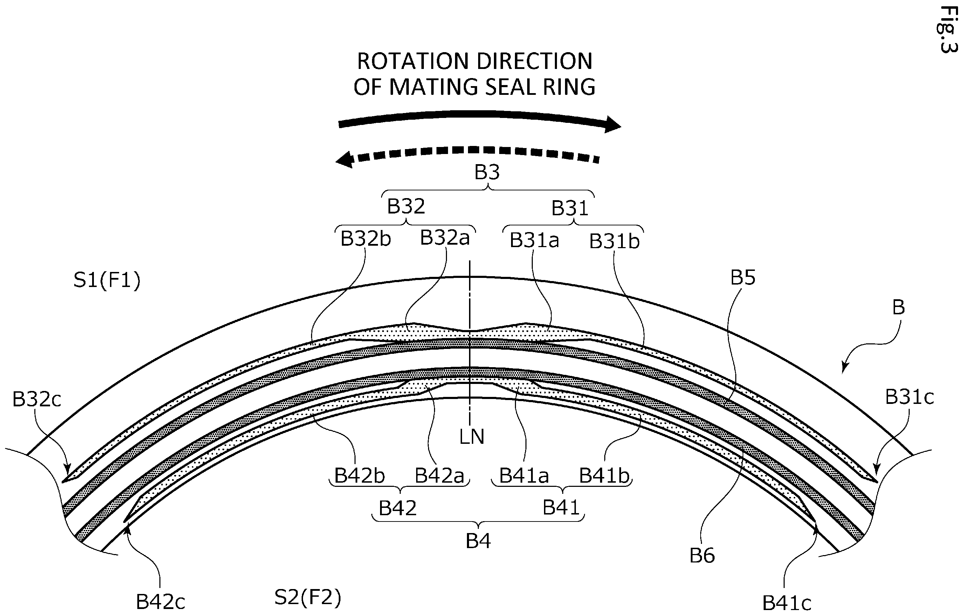

Next, a sliding component according to a second embodiment of the present invention will be described with reference to FIG. 3. Incidentally, the description of configurations that are the same as and overlap with the configurations of the first embodiment will be omitted. Hereinafter, the direction of a solid arrow will be described as the forward rotation direction of the rotating seal ring 20, and the direction of a dashed arrow will be described as a reverse rotation direction of the rotating seal ring 20.

A first pumping mechanism B3 of a stationary seal ring B of the second embodiment includes a first groove B31 that is one direction groove extending in the forward rotation direction of the rotating seal ring 20, and a first reverse groove B32 that is the other direction groove extending in the reverse rotation direction of the rotating seal ring 20, and the first groove B31 and the first reverse groove B32 communicate with each other.

The first groove B31 has substantially the same shape as the first pumping mechanism A3 of the first embodiment. Specifically, the first groove B31 includes an inclined groove portion B31a and a circumferential groove portion B31b.

The first reverse groove B32 is symmetrical to the first groove B31 with respect to a line LN extending in the radial direction. Specifically, the first reverse groove B32 includes an inclined groove portion B32a and a circumferential groove portion B32b.

The first groove B31 and the first reverse groove B32 are configured such that the inclined groove portions B31a and B32a communicate with each other in the circumferential direction and radial inner ends thereof communicate with a first annular groove B5.

A second pumping mechanism B4 of the stationary seal ring B of the second embodiment includes a second groove B41 that is one direction groove extending in the forward rotation direction of the rotating seal ring 20, and a second reverse groove B42 that is the other direction groove extending in the reverse rotation direction of the rotating seal ring 20, and the second groove B41 and the second reverse groove B42 communicate with each other.

The second groove B41 has substantially the same shape as the second pumping mechanism A4 of the first embodiment. Specifically, the second groove B41 includes an inclined groove portion B41a and a circumferential groove portion B41b.

The second reverse groove B42 is symmetrical to the second groove B41 with respect to the line LN extending in the radial direction. Specifically, the second reverse groove B42 includes an inclined groove portion B42a and a circumferential groove portion B42b.

The second groove B41 and the second reverse groove B42 are configured such that the inclined groove portions B41a and B42a communicate with each other in the circumferential direction and radial outer ends thereof communicate with a second annular groove B6.

When the rotating seal ring 20 rotates in the forward direction relative to the stationary seal ring B, in the first pumping mechanism B3, the first fluid F1 moves from a closed end B32c of the circumferential groove portion B32b toward a closed end B31c of the circumferential groove portion B31b. Accordingly, a slight positive pressure is generated at the closed end B31c and in the vicinity thereof, and a slight negative pressure is generated at the closed end B32c and in the vicinity thereof.

In addition, in the second pumping mechanism B4, the second fluid F2 moves from a closed end B42c of the circumferential groove portion B42b toward a closed end B41c of the circumferential groove portion B41b. Accordingly, a slight positive pressure is generated at the closed end B41c and in the vicinity thereof, and a slight negative pressure is generated at the closed end B42c and in the vicinity thereof.

On the other hand, when the rotating seal ring 20 rotates in the reverse direction relative to the stationary seal ring B, in the first pumping mechanism B3, the first fluid F1 moves from the closed end B31c of the circumferential groove portion B31b toward the closed end B32c of the circumferential groove portion B32b. Accordingly, a slight positive pressure is generated at the closed end B32c and in the vicinity thereof, and a slight negative pressure is generated at the closed end B31c and in the vicinity thereof.

In addition, in the second pumping mechanism B4, the second fluid F2 moves from the closed end B41c of the circumferential groove portion B41b toward the closed end B42c of the circumferential groove portion B42b. Accordingly, a slight positive pressure is generated at the closed end B42c and in the vicinity thereof, and a slight negative pressure is generated at the closed end B41c and in the vicinity thereof.

In such a manner, during the forward rotation of the rotating seal ring 20, the first groove B31 and the second groove B41 perform the function of discharging the first fluid F1 and the second fluid F2. On the other hand, during the reverse rotation of the rotating seal ring 20, since the first reverse groove B32 and the second reverse groove B42 perform the function of discharging the first fluid F1 and the second fluid F2, both rotations of the rotating seal ring 20 can be accommodated.

In addition, since the first groove B31 and the first reverse groove B32 communicate with each other, the first fluid F1 suctioned into one side can be discharged from the other side. Similarly, since the second groove B41 and the second reverse groove B42 communicate with each other, the second fluid F2 suctioned into one side can be discharged from the other side.

Incidentally, in the present embodiment, the mode in which the first groove B31 and the first reverse groove B32 are symmetrical and the second groove B41 and the second reverse groove B42 are symmetrical with respect to the line LN extending in the radial direction has been provided as an example; however, the first groove and the first reverse groove may be asymmetrical, and the second groove and the second reverse groove may be asymmetrical, for example, when viewed in the axial direction, the shapes or volumes of the first groove and the first reverse groove may be different, the shapes or volumes of the second groove and the second reverse groove may be different, the numbers of the first grooves and the first reverse grooves may be different, and the numbers of the second grooves and the second reverse grooves may be different.

In addition, the first pumping mechanism including the first groove and the first reverse groove and the second pumping mechanism including the second groove and the second reverse groove may have different shapes or volumes when viewed in the axial direction, and the numbers of the first pumping mechanisms and the second pumping mechanisms may be different.

### {Third embodiment}

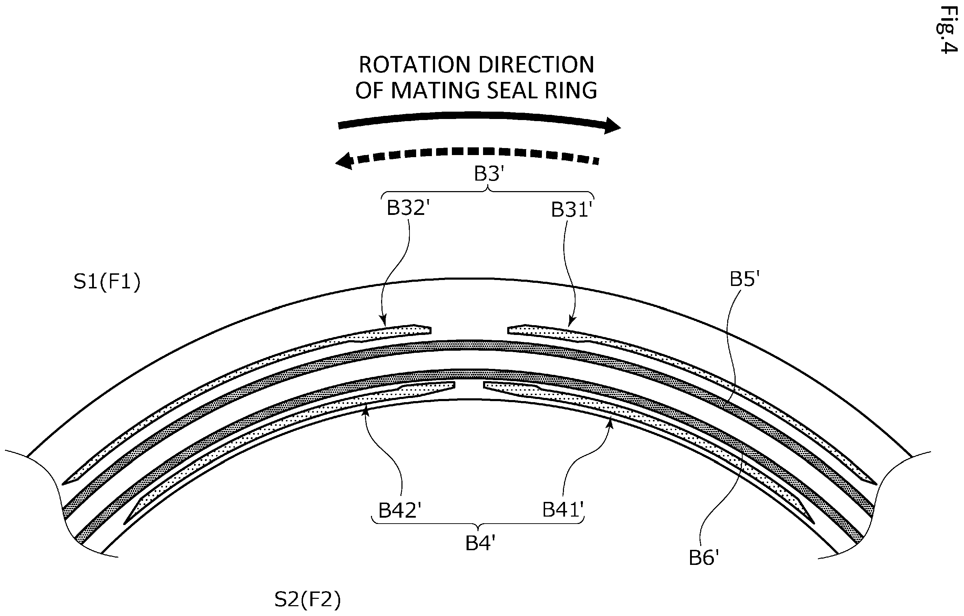

Next, a sliding component according to a third embodiment of the present invention will be described with reference to FIG. 4. Incidentally, the description of configurations that are the same as and overlap with the configurations of the second embodiment will be omitted.

As illustrated in FIG. 4, a first pumping mechanism B3' of the third embodiment is configured such that a first groove B31' and a first reverse groove B32' are spaced apart from each other in the circumferential direction and are spaced apart from a first annular groove B5' in the radial direction.

In addition, a second pumping mechanism B4' of the third embodiment is configured such that a second groove B41' and a second reverse groove B42' are spaced apart from each other in the circumferential direction and are spaced apart from a second annular groove B6' in the radial direction.

Incidentally, the first groove and the first reverse groove may communicate with the first annular groove at a position spaced apart therefrom in the radial direction. In addition, the second groove and the second reverse groove may communicate with the second annular groove at a position spaced apart therefrom in the radial direction.

In addition, each of the first groove and the first reverse groove may communicate with the first annular groove in a state where the first groove and the first reverse groove are spaced apart from each other in the circumferential direction. In addition, each of the second groove and the second reverse groove may communicate with the second annular groove in a state where the second groove and the second reverse groove are spaced apart from each other in the circumferential direction.

### {Fourth embodiment}

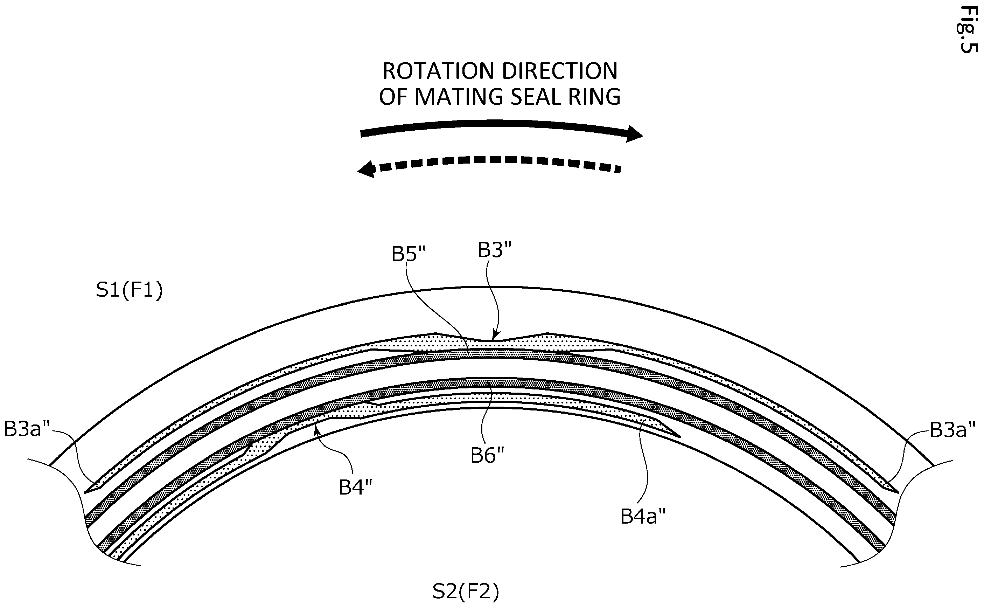

Next, a sliding component according to a fourth embodiment of the present invention will be described with reference to FIG. 5. Incidentally, the description of configurations that are the same as and overlap with the configurations of the second embodiment will be omitted.

As illustrated in FIG. 5, a first pumping mechanism B3'' and a second pumping mechanism B4'' are disposed to be shifted from each other in the circumferential direction. Namely, closed ends B3a'' on both circumferential sides of the first pumping mechanism B3'' and closed ends B4a'' on both circumferential sides of the second pumping mechanism B4'' (only one side is illustrated) are disposed to be shifted from each other in the circumferential direction. In addition, a communication portion between the first pumping mechanism B3'' and a first annular groove B5'', which is a location where the first fluid F1 flows in and out relatively frequently, and a communication portion between the second pumping mechanism B4'' and a second annular groove B6'', which is a location where the second fluid F2 flows in and out relatively frequently, are disposed to be shifted from each other in the circumferential direction.

For that reason, the first fluid F1 discharged from the closed ends B3a'' of the first pumping mechanism B3'' and the second fluid F2 discharged from the closed ends B4a'' of the second pumping mechanism B4'' are less likely to mix with each other.

In addition, the first fluid F1 that has leaked to a gap between sliding surfaces from the communication portion between the first pumping mechanism B3'' and the first annular groove B5'' and the second fluid F2 that has leaked to the gap between the sliding surfaces from the communication portion between the second pumping mechanism B4'' and the second annular groove B6'' are less likely to mix with each other, and pressures generated in the circumferential direction can be well balanced.

### {Fifth embodiment}

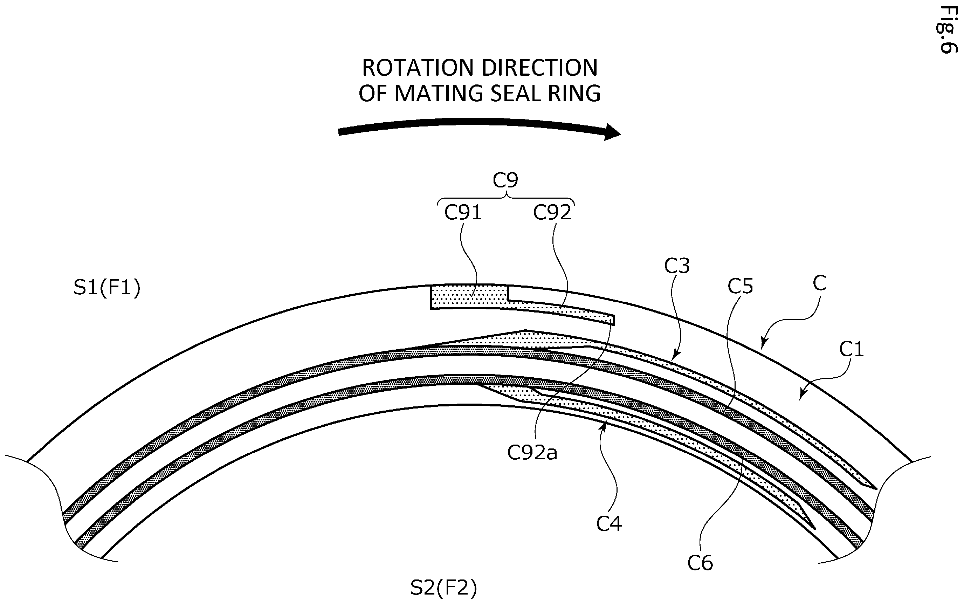

Next, a sliding component according to a fifth embodiment of the present invention will be described with reference to FIG. 6. Incidentally, the description of configurations that are the same as and overlap with the configurations of the first embodiment will be omitted.

A sliding surface C1 of a stationary seal ring C is provided with a first pumping mechanism C3, a second pumping mechanism C4, a first annular groove C5, a second annular groove C6, and a third dynamic pressure mechanism C9.

The third dynamic pressure mechanism C9 includes a radial groove C91 communicating with the outer space S1, and a Rayleigh step C92 serving as a third dynamic pressure mechanism extending from a radial inner end of the radial groove C91 in the forward rotation direction. Incidentally, the radial groove C91 is formed with the same depth as that of the Rayleigh step C92, but may be formed with a different depth.

When the rotating seal ring 20 rotates in the forward direction relative to the stationary seal ring C, in the Rayleigh step C92 of the third dynamic pressure mechanism C9, the first fluid F1 moves to a closed end C92a of the Rayleigh step C92, and a positive pressure is generated at the closed end C92a and in the vicinity thereof. Since sliding surfaces C1 and 21 are made spaced apart from each other by a force due to the positive pressure generated at the closed end C92a of the Rayleigh step C92 and in the vicinity thereof, lubricity can be improved, and wear between the sliding surfaces C1 and 21 can be suppressed.

### {Sixth embodiment}

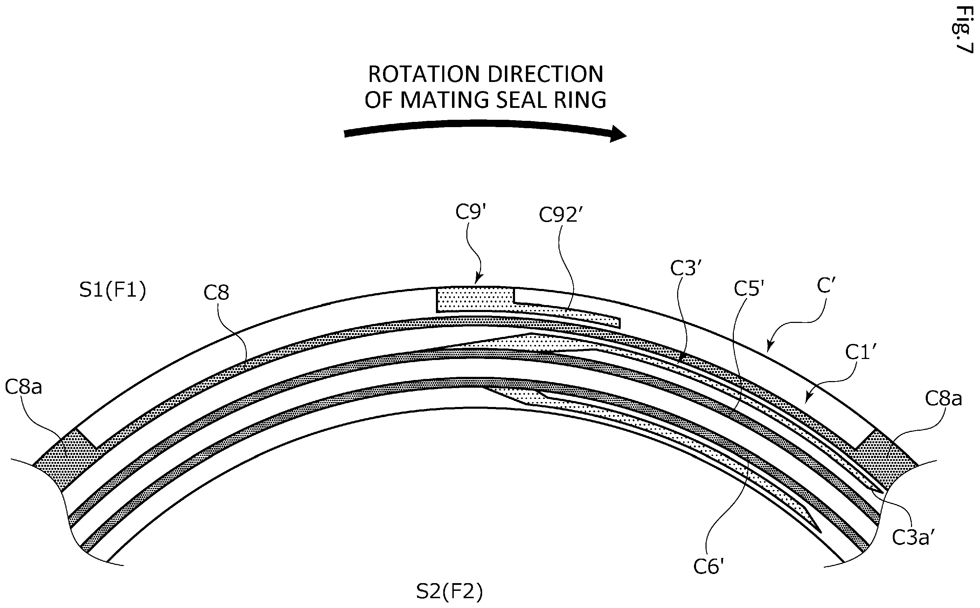

Next, a sliding component according to a sixth embodiment of the present invention will be described with reference to FIG. 7. Incidentally, the descriptions of configurations that are the same as and overlap with the configurations of the fifth embodiment will be omitted.

A sliding surface C1' of a stationary seal ring C' is provided with a fourth annular groove C8. The fourth annular groove C8 is provided at a position spaced apart to the radial outer side of a first annular groove C5'. The fourth annular groove C8 is concentric with the sliding surface C1' of the stationary seal ring C', and is formed with a constant depth in the circumferential direction. Incidentally, a depth of the fourth annular groove C8 may be the same as or different from a depth of the first annular groove C5' and a second annular groove C6'.

In the fourth annular groove C8, a plurality (four in the present embodiment) of communication grooves C8a extending in a radially outward direction to communicate with the outer space S1 are disposed in the circumferential direction. A depth of the communication grooves C8a is the same as the depth of the fourth annular groove C8.

According to this configuration, since the first fluid F1 flows into the fourth annular groove C8, a lubrication effect can be improved.

In addition, since a closed end C3a' of a first pumping mechanism C3' has an acute angle on the radial outer side when viewed in the axial direction, the first fluid F1 flowing out from the closed end C3a' flows into the fourth annular groove C8 disposed on the radial outer side of the closed end C3a', and is discharged to the outer space S1 via the communication groove C8a.

In addition, a dynamic pressure generated by the first pumping mechanism C3' and a dynamic pressure generated by a Rayleigh step C92' of a third dynamic pressure mechanism C9' are dispersed by the fourth annular groove C8 provided spaced apart therefrom in the radial direction, and interference between the dynamic pressures is suppressed.

### {Seventh embodiment}

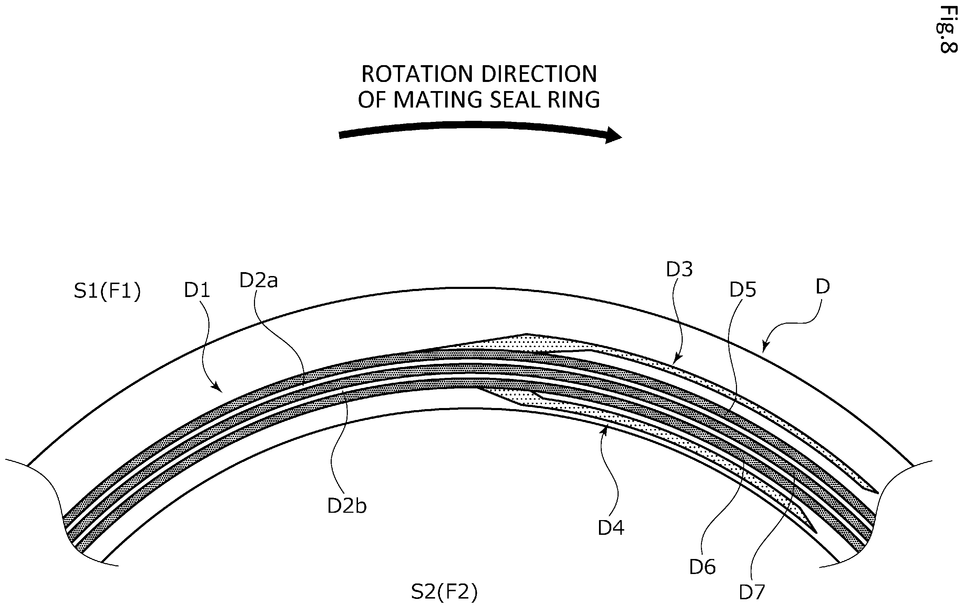

Next, a sliding component according to a seventh embodiment of the present invention will be described with reference to FIG. 8. Incidentally, the description of configurations that are the same as and overlap with the configurations of the first embodiment will be omitted.

A sliding surface D1 of a stationary seal ring D is provided with a first pumping mechanism D3, a second pumping mechanism D4, a first annular groove D5, a second annular groove D6, and a third annular groove D7 serving as an independent pressure release mechanism.

The third annular groove D7 is formed in a land portion between the first annular groove D5 on the radial outer side and the second annular groove D6 on the radial inner side, and is separated from the first annular groove D5 and the second annular groove D6. In other words, a land portion D2a is formed between the first annular groove D5 and the third annular groove D7, and a land portion D2b is formed between the second annular groove D6 and the third annular groove D7.

A radial width of the third annular groove D7 may be formed to be the same dimension as a radial width of the first annular groove D5 and the second annular groove D6, or may be formed to be a different dimension.

The third annular groove D7 is concentric with the sliding surface D1 of the stationary seal ring D, and is formed with a constant depth in the circumferential direction. Incidentally, a depth of the third annular groove D7 may be the same as or different from a depth of the first annular groove D5 and the second annular groove D6.

The first fluid F1 in the first annular groove D5 is made less likely to move toward the radial inner side by the land portion D2a, and the second fluid F2 in the second annular groove D6 is made less likely to move toward the radial outer side by the land portion D2b. Particularly, the second fluid F2 on a low-pressure side hardly moves further toward the radial outer side from the land portion D2b. In addition, the first fluid F1 on a high-pressure side may move slightly toward the radial inner side from the land portion D2a, but is collected in the third annular groove D7, and is prevented from moving further toward the radial inner side from the third annular groove D7.

In addition, a dynamic pressure generated by the first pumping mechanism D3 and a dynamic pressure generated by the second pumping mechanism D4 are more reliably dispersed by the third annular groove D7 formed in the land portion between the first annular groove D5 on the radial outer side and the second annular groove D6 on the radial inner side, and interference between the dynamic pressures is suppressed.

Incidentally, a plurality of the pressure release mechanisms may be substantially concentrically disposed. In addition, the pressure release mechanism is not limited to an endless annular groove such as an annular groove, but may have a dashed line shape or an arcuate shape.

### {Eighth embodiment}

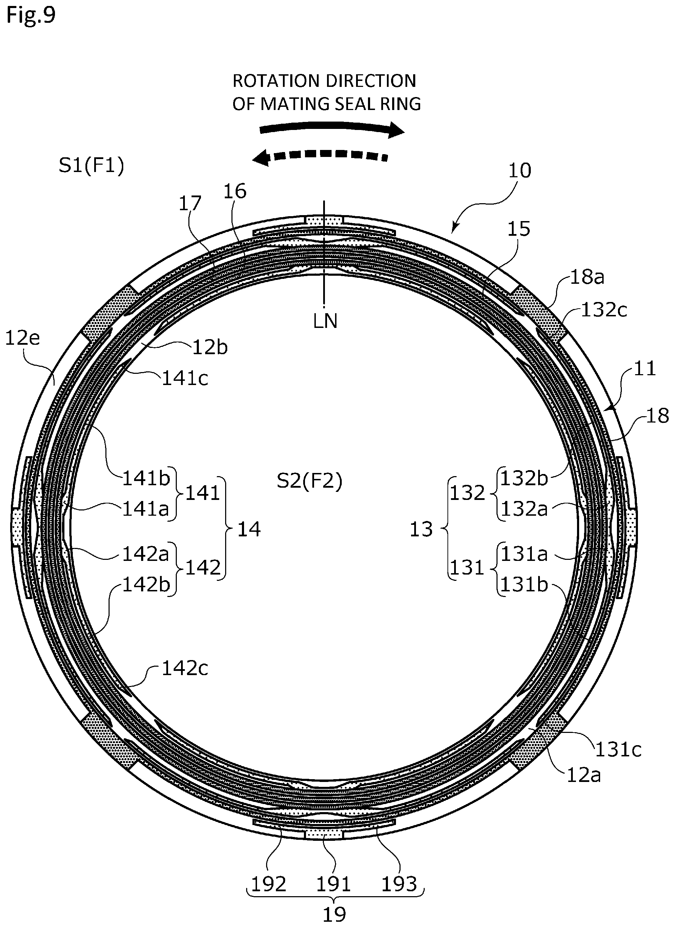

Next, a sliding component according to an eighth embodiment of the present invention will be described with reference to FIGS. 9 to 11. Incidentally, the description of configurations that are the same as and overlap with the configurations of the first embodiment will be omitted.

As illustrated in FIG. 9, a sliding surface 11 of a stationary seal ring 10 of the eighth embodiment is provided with a first pumping mechanism 13 serving as a first dynamic pressure mechanism, a second pumping mechanism 14 serving as a second dynamic pressure mechanism, a first annular groove 15 serving as a first storage groove, a second annular groove 16 serving as a second storage groove, a third annular groove 17 serving as an independent pressure release mechanism, a fourth annular groove 18 serving as a circumferential groove, and a third dynamic pressure mechanism 19, and the rest are land portions 12a, 12b, 12c, 12d, and 12e.

A plurality (four in the present embodiment) of the first pumping mechanisms 13 are disposed in the circumferential direction of the sliding surface 11. In detail, each of the first pumping mechanisms 13 includes a first groove 131 that is one direction groove extending in the forward rotation direction of the rotating seal ring 20, and a first reverse groove 132 that is the other direction groove extending in the reverse rotation direction of the rotating seal ring 20, and the first groove 131 and the first reverse groove 132 communicate with each other.

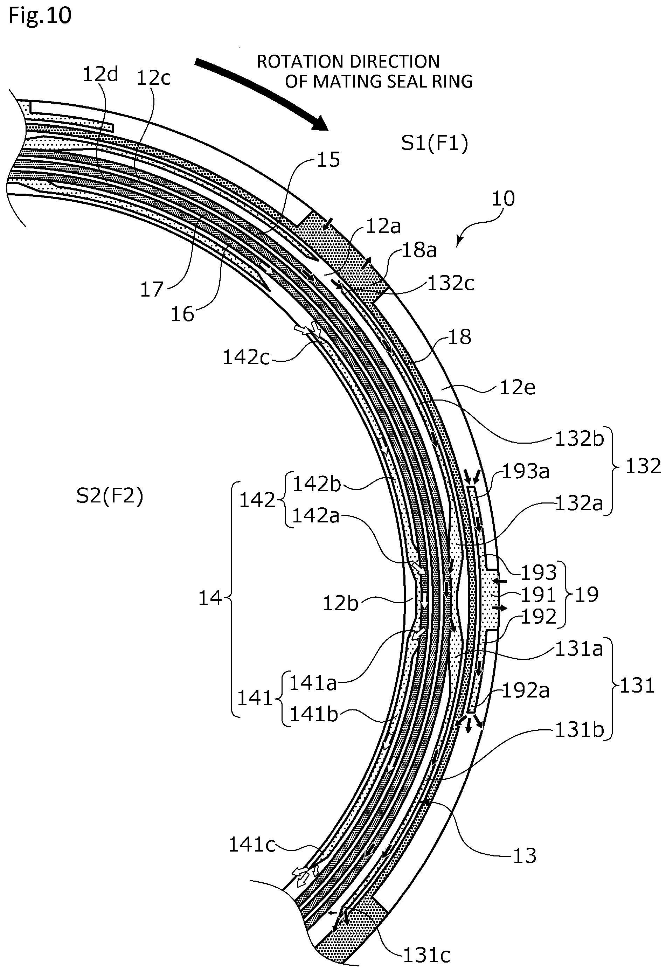

As illustrated in FIGS. 9 and 10, the first groove 131 includes an inclined groove portion 131a extending in an arcuate shape while inclining with a clockwise component from the radial inner side toward the radial outer side, and a circumferential groove portion 131b extending from a radial outer end of the inclined groove portion 131a in the forward rotation direction of the rotating seal ring 20.

An end portion of the circumferential groove portion 131b in the forward rotation direction is a closed end 131c that is inclined toward the radial outer side. A side surface on the radial outer side forming the circumferential groove portion 131b is longer in the forward rotation direction than a facing side surface on the radial inner side. Namely, the closed end 131c has an acute angle on the radial outer side and an obtuse angle on the radial inner side when viewed in the axial direction.

The first reverse groove 132 includes an inclined groove portion 132a extending in an arcuate shape while inclining with a counterclockwise component from the radial inner side toward the radial outer side, and a circumferential groove portion 132b extending from a radial outer end of the inclined groove portion 132a in the reverse rotation direction of the rotating seal ring 20.

An end portion of the circumferential groove portion 132b in the reverse rotation direction is a closed end 132c that is inclined toward the radial outer side. A side surface on the radial outer side forming the circumferential groove portion 132b is longer in the reverse rotation direction than a facing side surface on the radial inner side. Namely, the closed end 132c has an acute angle on the radial outer side and an obtuse angle on the radial inner side when viewed in the axial direction.

A radial inner end of the inclined groove portion 131a and a radial inner end of the inclined groove portion 132a communicate with each other in the circumferential direction, and communicate with the first annular groove 15 to be described later in the radial direction. In addition, a depth of the first groove 131 and the first reverse groove 132, namely, a depth of the first pumping mechanism 13 is a constant depth in the circumferential direction.

The first groove 131 and the first reverse groove 132 are symmetrical with respect to the line LN extending in the radial direction.

A plurality (four in the present embodiment) of the second pumping mechanisms 14 are disposed on the radial inner side of the sliding surface 11 in the circumferential direction. In detail, each of the second pumping mechanisms 14 includes a second groove 141 that is one direction groove extending in the forward rotation direction of the rotating seal ring 20, and a second reverse groove 142 that is the other direction groove extending in the reverse rotation direction of the rotating seal ring 20, and the second groove 141 and the second reverse groove 142 communicate with each other.

The second groove 141 includes an inclined groove portion 141a extending in an arcuate shape while inclining with a clockwise component from the radial outer side toward the radial inner side, and a circumferential groove portion 141b extending from a radial inner end of the inclined groove portion 141a in the forward rotation direction of the rotating seal ring 20.

An end portion of the circumferential groove portion 141b in the forward rotation direction is a closed end 141c that is inclined toward the radial inner side. A side surface on the radial inner side forming the circumferential groove portion 141b is longer in the forward rotation direction than a facing side surface on the radial outer side. Namely, the closed end 141c has an acute angle on the radial inner side and an obtuse angle on the radial outer side when viewed in the axial direction.

The second reverse groove 142 includes an inclined groove portion 142a extending in an arcuate shape while inclining with a counterclockwise component from the radial outer side toward the radial inner side, and a circumferential groove portion 142b extending from a radial inner end of the inclined groove portion 142a in the reverse rotation direction of the rotating seal ring 20.

An end portion of the circumferential groove portion 142b in the reverse rotation direction is a closed end 142c that is inclined toward the radial inner side. A side surface on the radial inner side forming the circumferential groove portion 142b is longer in the reverse rotation direction than a facing side surface on the radial outer side. Namely, the closed end 142c has an acute angle on the radial inner side and an obtuse angle on the radial outer side when viewed in the axial direction.

A radial outer end of the inclined groove portion 141a and a radial outer end of the inclined groove portion 142a communicate with each other in the circumferential direction, and communicate with the second annular groove 16 to be described later in the radial direction. In addition, a depth of the second groove 141 and the second reverse groove 142, namely, a depth of the second pumping mechanism 14 is a constant depth in the circumferential direction. Incidentally, in the present embodiment, the depth of the first pumping mechanism 13 and the depth of the second pumping mechanism 14 are the same.

The second groove 141 and the second reverse groove 142 are symmetrical with respect to the line LN extending in the radial direction.

The first annular groove 15 is disposed on the radial inner side of the first pumping mechanism 13. The first annular groove 15 is formed concentrically with the sliding surface 11 of the stationary seal ring 10. The radial inner ends of the inclined groove portions 131a and 132a communicate with the first annular groove 15 in the radial direction.

Incidentally, the first annular groove 15 is formed with a constant depth in the circumferential direction, and a depth of the first annular groove 15 is deeper than the depth of the first pumping mechanism 13.

The land portion 12a is formed between the first annular groove 15 and the first groove 131, between the first annular groove 15 and the first reverse groove 132, between the first groove 131 and the first reverse groove 132, and between the fourth annular groove 18 to be described later and each of the first groove 131 and the first reverse groove 132.

The second annular groove 16 is disposed adjacent to the radial outer side of the second pumping mechanism 14. The second annular groove 16 is formed concentrically with the sliding surface 11 of the stationary seal ring 10. A radial width of the second annular groove 16 is formed to be the same dimension as a radial width of the first annular groove 15.

In addition, the radial outer ends of the inclined groove portions 141a and 142a communicate with the second annular groove 16 in the radial direction. Incidentally, the second annular groove 16 is formed with a constant depth in the circumferential direction, and a depth of the second annular groove 16 is deeper than the depth of the second pumping mechanism 14. Incidentally, the depth of the second annular groove 16 is same as the depth of the first annular groove 15.

The land portion 12b is formed on the radial inner side of the second pumping mechanism 14 between the second annular groove 16 and the second groove 141, between the second annular groove 16 and the second reverse groove 142, and between the second groove 141 and the second reverse groove 142.

The third annular groove 17 is formed in a land portion between the first annular groove 15 on the radial outer side and the second annular groove 16 on the radial inner side, and is separated from the first annular groove 15 and the second annular groove 16. A radial width of the third annular groove 17 is formed to be the same dimension as the radial width of the first annular groove 15 and the second annular groove 16.

The third annular groove 17 is concentric with the sliding surface 11 of the stationary seal ring 10, and is formed with a constant depth in the circumferential direction. Incidentally, a depth of the third annular groove 17 is the same as the depth of the first annular groove 15 and the second annular groove 16.

The land portion 12c having an annular shape is formed between the third annular groove 17 and the first annular groove 15, and the land portion 12d having an annular shape is formed between the third annular groove 17 and the second annular groove 16 (particularly, refer to FIG. 10). Incidentally, in the present embodiment, a radial width of the land portion 12c and a radial width of the land portion 12d are formed to be the same dimension.

The fourth annular groove 18 is provided at a position spaced apart to the radial outer side of the first annular groove 15. The fourth annular groove 18 is concentric with the sliding surface 11 of the stationary seal ring 10, and is formed with a constant depth in the circumferential direction. Incidentally, a depth of the fourth annular groove 18 is the same as the depth of the first annular groove 15 to the third annular groove 17.

In the fourth annular groove 18, a plurality (four in the present embodiment) of communication grooves 18a extending in the radially outward direction to communicate with the outer space S1 are disposed in the circumferential direction. A depth of the communication grooves 18a is the same as the depth of the fourth annular groove 18.

The closed ends 131c and 132c of the first pumping mechanism 13 are disposed on the radial inner side of the communication groove 18a. In other words, the communication groove 18a and the closed ends 131c and 132c overlap each other in the radial direction.

The land portion 12e is formed in portions excluding the communication grooves 18a and the third dynamic pressure mechanism 19 to be described later, on the radial outer side of the fourth annular groove 18.

The third dynamic pressure mechanism 19 includes a radial groove 191 communicating with the outer space S1; a Rayleigh step 192 serving as a third dynamic pressure mechanism extending from a radial inner end of the radial groove 191 in the forward rotation direction; and a reverse Rayleigh step 193 serving as a third dynamic pressure mechanism extending from the radial inner end of the radial groove 191 in the reverse rotation direction. Incidentally, the radial groove 191 is formed with the same depth as that of the Rayleigh step 192 and the reverse Rayleigh step 193.

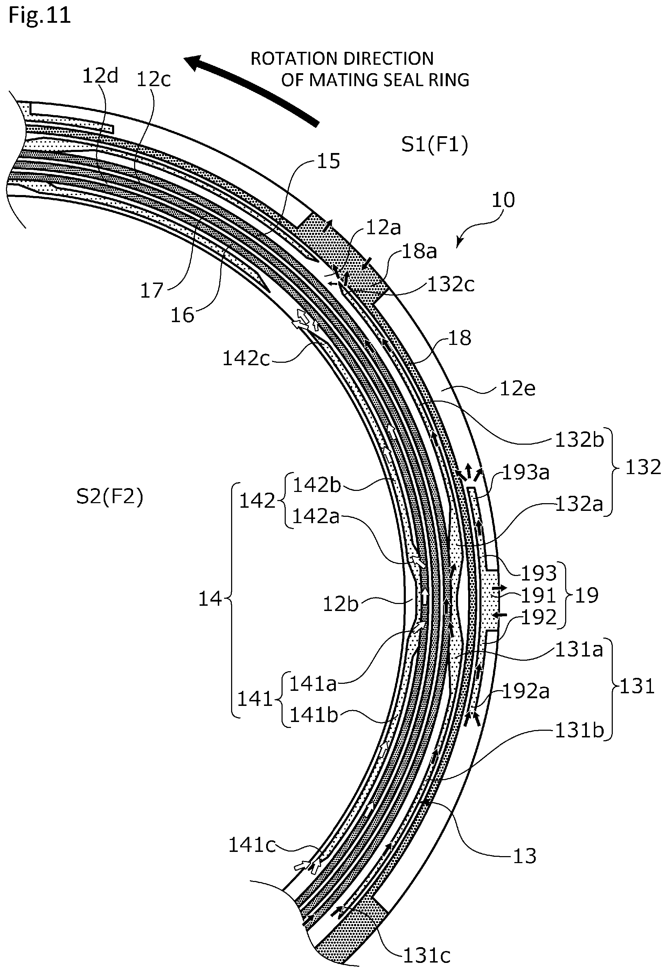

Next, the flows of the first fluid F1 and the second fluid F2 during relative rotation between the stationary seal ring 10 and the rotating seal ring 20 will be briefly described with reference to FIGS. 10 and 11. Incidentally, here, the description will be provided without specifying a relative rotation speed between the stationary seal ring 10 and the rotating seal ring 20.

First, when the rotating seal ring 20 is not in rotation and is stopped, the first fluid F1 flows into the fourth annular groove 18, the third dynamic pressure mechanism 19, the first pumping mechanism 13, and the first annular groove 15, and the second fluid F2 flows into the second pumping mechanism 14 and the second annular groove 16.

In addition, since the land portion 12c and the first annular groove 15 are disposed on the radial outer side of the third annular groove 17, and the land portion 12d and the second annular groove 16 are disposed on the radial inner side, the first fluid F1 and the second fluid F2 are less likely to flow into the third annular groove 17 due to the labyrinth effect.

Incidentally, since the stationary seal ring 10 is biased toward the rotating seal ring 20 side by the elastic member 7, the sliding surfaces 11 and 21 are in contact with each other, and the first fluid F1 and the second fluid F2 are hardly mixed between the sliding surfaces 11 and 21.

Next, a state where the rotating seal ring 20 rotates in the forward direction relative to the stationary seal ring 10 will be described.

As illustrated in FIG. 10, when the rotating seal ring 20 rotates in the forward direction relative to the stationary seal ring 10, in the Rayleigh step 192 of the third dynamic pressure mechanism 19, the first fluid F1 moves to a closed end 192a of the Rayleigh step 192, and a positive pressure is generated at the closed end 192a and in the vicinity thereof. Since the sliding surfaces 11 and 21 are made spaced apart from each other by a force due to the positive pressure generated at the closed end 192a of the Rayleigh step 192 and in the vicinity thereof, lubricity can be improved, and wear between the sliding surfaces 11 and 21 can be suppressed.

In addition, in the reverse Rayleigh step 193, the first fluid F1 moves from a closed end 193a to the radial groove 191, and a relative negative pressure is generated at the closed end 193a and in the vicinity thereof. Therefore, the first fluid F1 around the closed end 193a of the reverse Rayleigh step 193 is suctioned by the relative negative pressure generated at the closed end 193a and in the vicinity thereof. Incidentally, the relative negative pressure referred to here does not indicate a vacuum state, but indicates a state where the pressure is lower than the surrounding pressure.

In addition, the first fluid F1 that is not suctioned into the reverse Rayleigh step 193 flows into the fourth annular groove 18, and is discharged to the outer space S1 via the communication groove 18a.

In the first pumping mechanism 13, the first annular groove 15, and the fourth annular groove 18, the first fluid F1 moves to follow the relative rotation of the rotating seal ring 20, and in the second pumping mechanism 14 and the second annular groove 16, the second fluid F2 moves to follow the relative rotation of the rotating seal ring 20.

Specifically, in the first pumping mechanism 13, the first fluid F1 moves from the closed end 132c of the circumferential groove portion 132b toward the closed end 131c of the circumferential groove portion 131b. Accordingly, a slight positive pressure is generated at the closed end 131c and in the vicinity thereof, and a slight negative pressure is generated at the closed end 132c and in the vicinity thereof.

Therefore, the sliding surfaces 11 and 21 are made spaced apart from each other by the third dynamic pressure mechanism 19, so that the first fluid F1 flowing from the outer space S1 toward the radial inner side across the fourth annular groove 18 is suctioned into the first pumping mechanism 13. The first fluid F1 suctioned into the first pumping mechanism 13 flows toward the closed end 131c, some of the first fluid F1 is discharged from the closed end 131c into a gap between the sliding surfaces 11 and 21 again, and some of the first fluid F1 flows into the first annular groove 15.

Incidentally, since the closed end 131c has an acute angle on the radial outer side when viewed in the axial direction, the first fluid F1 flowing out from the closed end 131c into the gap between the sliding surfaces 11 and 21 is easily guided to flow into the communication groove 18a disposed on the radial outer side of the closed end 131c. In addition, the first fluid F1 that does not flow into the communication groove 18a is suctioned into the closed end 132c of the first pumping mechanism 13 on a downstream side of the relative rotation.

In addition, the first fluid F1 that is not suctioned into the first pumping mechanism 13 and flows further toward the radial inner side across the first pumping mechanism 13 flows into the first annular groove 15. The first fluid F1 that has flowed into the first annular groove 15 is led from the first pumping mechanism 13. In detail, the first fluid F1 that has flowed into the first annular groove 15 is guided toward the downstream side in the circumferential direction, is suctioned into the first pumping mechanism 13 on the downstream side, and flows out from the closed end 131c of the first pumping mechanism 13 and the vicinity thereof.

On the other hand, in the second pumping mechanism 14, the second fluid F2 moves from the closed end 142c of the circumferential groove portion 142b toward the closed end 141c of the circumferential groove portion 141b. Accordingly, a slight positive pressure is generated at the closed end 141c and in the vicinity thereof, and a slight negative pressure is generated at the closed end 142c and in the vicinity thereof.

Therefore, the sliding surfaces 11 and 21 are made spaced apart from each other by the third dynamic pressure mechanism 19, so that the second fluid F2 flowing from the inner space S2 into the gap between the sliding surfaces 11 and 21 is suctioned into the second pumping mechanism 14. The second fluid F2 suctioned into the second pumping mechanism 14 flows toward the closed end 141c, some of the second fluid F2 is discharged from the closed end 141c into the gap between the sliding surfaces 11 and 21 again, and some of the second fluid F2 flows into the second annular groove 16.

Incidentally, since the closed end 141c has an acute angle on the radial inner side when viewed in the axial direction, the second fluid F2 flowing out from the closed end 141c into the gap between the sliding surfaces 11 and 21 is easily guided to flow into the inner space S2. In addition, the second fluid F2 that does not flow into the inner space S2 is suctioned into the closed end 142c of the second pumping mechanism 14 on the downstream side of the relative rotation.

In addition, the second fluid F2 that is not suctioned into the second pumping mechanism 14 and flows further toward the radial outer side across the second pumping mechanism 14 flows into the second annular groove 16. In detail, the second fluid F2 that has flowed into the second annular groove 16 is guided toward the downstream side in the circumferential direction, is suctioned into the second pumping mechanism 14 on the downstream side, and flows out from the closed end 141c of the second pumping mechanism 14 and the vicinity thereof.

In addition, as described above, the first fluid F1 in the first annular groove 15 is made less likely to move toward the radial inner side by the land portion 12c, and the second fluid F2 in the second annular groove 16 is made less likely to move toward the radial outer side by the land portion 12d. Particularly, the second fluid F2 on the low-pressure side hardly moves further toward the radial outer side from the land portion 12d. In addition, the first fluid F1 on the highpressure side may move slightly toward the radial inner side from the land portion 12c, but is collected in the third annular groove 17, and is prevented from moving further toward the radial inner side from the third annular groove 17.

Next, a state where the rotating seal ring 20 rotates in the reverse direction relative to the stationary seal ring 10 will be described.

As illustrated in FIG. 11, when the rotating seal ring 20 rotates in the reverse direction relative to the stationary seal ring 10, in the reverse Rayleigh step 193 of the third dynamic pressure mechanism 19, the first fluid F1 moves to the closed end 193a of the reverse Rayleigh step 193, and a positive pressure is generated at the closed end 193a and in the vicinity thereof. Since the sliding surfaces 11 and 21 are made spaced apart from each other by a force due to the positive pressure generated at the closed end 193a of the reverse Rayleigh step 193 and in the vicinity thereof, lubricity can be improved, and wear between the sliding surfaces 11 and 21 can be suppressed.

In addition, in the Rayleigh step 192, the first fluid F1 moves from the closed end 192a to the radial groove 191, and a relative negative pressure is generated at the closed end 192a and in the vicinity thereof. Therefore, the first fluid F1 around the closed end 192a of the Rayleigh step 192 is suctioned by the relative negative pressure generated at the closed end 192a and in the vicinity thereof.

In addition, the first fluid F1 that is not suctioned into the Rayleigh step 192 flows into the fourth annular groove 18, and is discharged to the outer space S1 via the communication groove 18a.

In the first pumping mechanism 13, the first fluid F1 moves from the closed end 131c of the circumferential groove portion 131b toward the closed end 132c of the circumferential groove portion 132b. Accordingly, a slight positive pressure is generated at the closed end 132c and in the vicinity thereof, and a slight negative pressure is generated at the closed end 131c and in the vicinity thereof.

Therefore, the sliding surfaces 11 and 21 are made spaced apart from each other by the third dynamic pressure mechanism 19, so that the first fluid F1 flowing from the outer space S1 toward the radial inner side across the fourth annular groove 18 is suctioned into the first pumping mechanism 13. The first fluid F1 suctioned into the first pumping mechanism 13 flows toward the closed end 132c, some of the first fluid F1 is discharged from the closed end 132c into the gap between the sliding surfaces 11 and 21 again, and some of the first fluid F1 flows into the first annular groove 15.

Incidentally, since the closed end 132c has an acute angle on the radial outer side when viewed in the axial direction, the first fluid F1 flowing out from the closed end 132c into the gap between the sliding surfaces 11 and 21 is easily guided to flow into the communication groove 18a disposed on the radial outer side of the closed end 132c. In addition, the first fluid F1 that does not flow into the communication groove 18a is suctioned into the closed end 131c of the first pumping mechanism 13 on the downstream side of the relative rotation.

In addition, the first fluid F1 that is not suctioned into the first pumping mechanism 13 and flows further toward the radial inner side across the first pumping mechanism 13 flows into the first annular groove 15. In detail, the first fluid F1 that has flowed into the first annular groove 15 is guided toward the downstream side in the circumferential direction, is suctioned into the first pumping mechanism 13 on the downstream side, and flows out from the closed end 132c of the first pumping mechanism 13 and the vicinity thereof.

On the other hand, in the second pumping mechanism 14, the second fluid F2 moves from the closed end 141c of the circumferential groove portion 141b toward the closed end 142c of the circumferential groove portion 142b. Accordingly, a slight positive pressure is generated at the closed end 142c and in the vicinity thereof, and a slight negative pressure is generated at the closed end 141c and in the vicinity thereof.

Therefore, the sliding surfaces 11 and 21 are made spaced apart from each other by the third dynamic pressure mechanism 19, so that the second fluid F2 flowing from the inner space S2 into the gap between the sliding surfaces 11 and 21 is suctioned into the second pumping mechanism 14. The second fluid F2 suctioned into the second pumping mechanism 14 flows toward the closed end 142c, some of the second fluid F2 is discharged from the closed end 142c into the gap between the sliding surfaces 11 and 21 again, and some of the second fluid F2 flows into the second annular groove 16.

Incidentally, since the closed end 142c has an acute angle on the radial inner side when viewed in the axial direction, the second fluid F2 flowing out from the closed end 142c into the gap between the sliding surfaces 11 and 21 is easily guided to flow into the inner space S2. In addition, the second fluid F2 that does not flow into the inner space S2 is suctioned into the closed end 141c of the second pumping mechanism 14 on the downstream side of the relative rotation.

In addition, the second fluid F2 that is not suctioned into the second pumping mechanism 14 and flows further toward the radial outer side across the second pumping mechanism 14 flows into the second annular groove 16. In detail, the second fluid F2 that has flowed into the second annular groove 16 is guided toward the downstream side in the circumferential direction, is suctioned into the second pumping mechanism 14 on the downstream side, and flows out from the closed end 142c of the second pumping mechanism 14 and the vicinity thereof.

As described above, the first annular groove 15 and the second annular groove 16 are provided on the sliding surface 11 of the stationary seal ring 10 between the first pumping mechanism 13 and the second pumping mechanism 14 with the land portions 12c and 12d interposed therebetween, the land portions 12c and 12d being continuous in the circumferential direction. According to this configuration, since the first fluid F1 flowing across the first pumping mechanism 13 toward the inner space S2 side is collected in the first annular groove 15, and the second fluid F2 flowing across the second pumping mechanism 14 toward the outer space S1 side is collected in the second annular groove 16, the mixing of the first fluid F1 and the second fluid F2 between the sliding surfaces 11 and 21 is suppressed. Accordingly, the first fluid F1 and the second fluid F2 are temporarily stored in the first annular groove 15 and the second annular groove 16, respectively, in a state where the mixing thereof is prevented, so that a lubrication effect between the sliding surfaces 11 and 21 can be improved.

In addition, since the first annular groove 15 and the second annular groove 16 are provided to correspond to the first pumping mechanism 13 and the second pumping mechanism 14, respectively, the mixing of the first fluid F1 and the second fluid F2 is suppressed compared to the conventional art where one annular groove is used, the dynamic pressure generated by the first pumping mechanism 13 and the dynamic pressure generated by the second pumping mechanism 14 are dispersed by the first annular groove 15 and the second annular groove 16 provided spaced apart from each other in the radial direction, and interference between the dynamic pressures is suppressed.

In addition, the first pumping mechanism 13 and the first annular groove 15 communicate with each other, and the second pumping mechanism 14 and the second annular groove 16 communicate with each other. According to this configuration, the first fluid F1 collected by the first pumping mechanism 13 can be introduced into the first annular groove 15, and the first fluid F1 stored in the first annular groove 15 can be led to the first pumping mechanism 13. In addition, the second fluid F2 collected by the second pumping mechanism 14 can be introduced into the second annular groove 16, and the second fluid F2 stored in the second annular groove 16 can be led to the second pumping mechanism 14.

In addition, the plurality of first pumping mechanisms 13 communicate with the first annular groove 15, and the plurality of second pumping mechanisms 14 communicate with the second annular groove 16. According to this configuration, the first annular groove 15 can collect the first fluid F1 from the first pumping mechanisms 13, and can lead the collected first fluid F1 to any of the first pumping mechanisms 13 in the circumferential direction. Similarly, the second annular groove 16 can collect the second fluid F2 from the second pumping mechanisms 14, and can lead the collected second fluid F2 to any of the second pumping mechanisms 14 in the circumferential direction.

In addition, the first pumping mechanisms 13 and the second pumping mechanisms 14 of the first embodiment are long in the circumferential direction. Specifically, since the first pumping mechanisms 13 and the second pumping mechanisms 14 exist over substantially 80% or more of a circumferential length of the sliding surface 11, the first fluid F1 is less likely to be guided from the outer space S1 to the first annular groove 15, and the second fluid F2 is less likely to be guided from the inner space S2 to the second annular groove 16.

In addition, it is preferable that, from the viewpoint of ensuring the amount of the first fluid F1 and the second fluid F2 used for lubrication, the first groove 131, the first reverse groove 132, the second groove 141, and the second reverse groove 142 are deeper than the Rayleigh step 192 and the reverse Rayleigh step 193 of the third dynamic pressure mechanism 19.

In addition, the independent third annular groove 17 is provided in the land portion having an annular shape between the first annular groove 15 and the second annular groove 16. According to this configuration, even when the first fluid F1 moves across the first annular groove 15 toward the radial inner side, or the second fluid F2 moves across the second annular groove 16 toward the radial outer side, the first fluid F1 or the second fluid F2 can be collected in the third annular groove 17, so that the first fluid F1 and the second fluid F2 can be prevented from mixing with each other. Therefore, interference between the dynamic pressure generation function of the first pumping mechanism 13 and the dynamic pressure generation function of the second pumping mechanism 14 is suppressed.

In addition, since the land portion 12c and the first annular groove 15 are disposed on the radial outer side of the third annular groove 17, and the land portion 12d and the second annular groove 16 are disposed on the radial inner side, the first fluid F1 and the second fluid F2 are less likely to flow into the third annular groove 17 due to the labyrinth effect.

In addition, the first pumping mechanism 13 includes the first groove 131 extending in the forward rotation direction, and the first reverse groove 132 extending in the reverse rotation direction, and the second pumping mechanism 14 includes the second groove 141 extending in the forward rotation direction, and the second reverse groove 142 extending in the reverse rotation direction. According to this configuration, during the forward rotation of the rotating seal ring 20, the first groove 131 and the second groove 141 have the function of discharging the first fluid F1 and the second fluid F2. On the other hand, during the reverse rotation of the rotating seal ring 20, since the first reverse groove 132 and the second reverse groove 142 perform the function of discharging the first fluid F1 and the second fluid F2, both rotations of the rotating seal ring 20 can be accommodated.

In addition, since the first groove 131 and the first reverse groove 132 communicate with each other, during the forward rotation of the rotating seal ring 20, the first fluid F1 suctioned into the first reverse groove 132 can flow into the first groove 131, and the first fluid F1 can be discharged from the closed end 131c of the first groove 131 into the gap between the sliding surfaces 11 and 21. In addition, during the reverse rotation of the rotating seal ring 20, the first fluid F1 suctioned into the first groove 131 can flow into the first reverse groove 132, and the first fluid F1 can be discharged from the closed end 132c of the first reverse groove 132 into the gap between the sliding surfaces 11 and 21.

In addition, since the first groove 131 and the first reverse groove 132 communicate with each other in the circumferential direction, the first fluid F1 can flow directly between the first groove 131 and the first reverse groove 132 without passing through the first annular groove 15, so that the flow of the first fluid F1 into the first annular groove 15 can be suppressed, and the first fluid F1 can be made less likely to leak from the first annular groove 15 toward the radial inner side.

In addition, since the second groove 141 and the second reverse groove 142 communicate with each other, during the forward rotation of the rotating seal ring 20, the second fluid F2 suctioned into the second reverse groove 142 can flow into the second groove 141, and the second fluid F2 can be discharged from the closed end 141c of the second groove 141 into the gap between the sliding surfaces 11 and 21. In addition, during the reverse rotation of the rotating seal ring 20, the second fluid F2 suctioned into the second groove 141 can flow into the second reverse groove 142, and the second fluid F2 can be discharged from the closed end 142c of the second reverse groove 142 into the gap between the sliding surfaces 11 and 21.

In addition, since the second groove 141 and the second reverse groove 142 communicate with each other in the circumferential direction, the second fluid F2 can flow directly between the second groove 141 and the second reverse groove 142 without passing through the second annular groove 16, so that the flow of the second fluid F2 into the second annular groove 16 can be suppressed, and the second fluid F2 can be made less likely to leak from the second annular groove 16 toward the radial outer side.

In addition, the first groove 131 and the first reverse groove 132 are symmetrical with respect to the line LN extending in the radial direction, and the second groove 141 and the second reverse groove 142 are symmetrical with respect to the line LN extending in the radial direction. Accordingly, the first pumping mechanism 13 and the second pumping mechanism 14 can be made to function in the same manner regardless of the rotation direction of the rotating seal ring 20.

In addition, the first groove 131, the first reverse groove 132, the second groove 141, and the second reverse groove 142 include the closed ends 131c, 132c, 142c and 142c, respectively. In other words, since the first groove 131, the first reverse groove 132, the second groove 141, and the second reverse groove 142 do not communicate with the outer space S1 and the inner space S2, the flow rates of the first fluid F1 and the second fluid F2 flowing from the outer space S1 and the inner space S2 into each groove can be restricted, and the first fluid F1 and the second fluid F2 can be prevented from mixing with each other while improving slidability between the sliding surfaces 11 and 21.

In addition, the closed ends 131c and 132c that are inclined toward the outer space S1 side are formed in the first pumping mechanism 13, and the closed ends 141c and 142c that are inclined toward the inner space S2 side are formed in the second pumping mechanism 14. According to this configuration, since the first fluid F1 is led from the closed end 131c or the closed end 132c of the first pumping mechanism 13 to the outer space S1, and the second fluid F2 is led from the closed end 141c or the closed end 142c of the second pumping mechanism 14 to the inner space S2, the first fluid can be efficiently returned to the first fluid space, and the second fluid can be efficiently returned to the second fluid space. In such a manner, the mixing of the first fluid F1 and the second fluid F2 can be further prevented, and the dynamic pressure generated by the first pumping mechanism 13 and the dynamic pressure generated by the second pumping mechanism 14 are less likely to interfere with each other.

In addition, the third dynamic pressure mechanism 19 is provided on the outer space S1 side of the sliding surface 11, and the fourth annular groove 18 is provided between the third dynamic pressure mechanism 19 and the first pumping mechanism 13. According to this configuration, the dynamic pressure generation function by the third dynamic pressure mechanism 19 and the suction and discharge function for the first fluid F1 by the fourth annular groove 18 can be prevented from interfering with each other.

Incidentally, in the present embodiment, the mode in which the first groove 131 and the first reverse groove 132 communicate with each other in the circumferential direction and communicate with the first annular groove 15 has been provided as an example; however, the present invention is not limited thereto, and the first groove and the first reverse groove may be spaced apart from each other in the circumferential direction, and may communicate with the first annular groove.

Similarly, in the present embodiment, the mode in which the second groove 141 and the second reverse groove 142 communicate with each other in the circumferential direction and communicate with the second annular groove 16 has been provided as an example; however, the present invention is not limited thereto, and the second groove and the second reverse groove may be spaced apart from each other in the circumferential direction, and may communicate with the second annular groove.

### {Ninth embodiment}

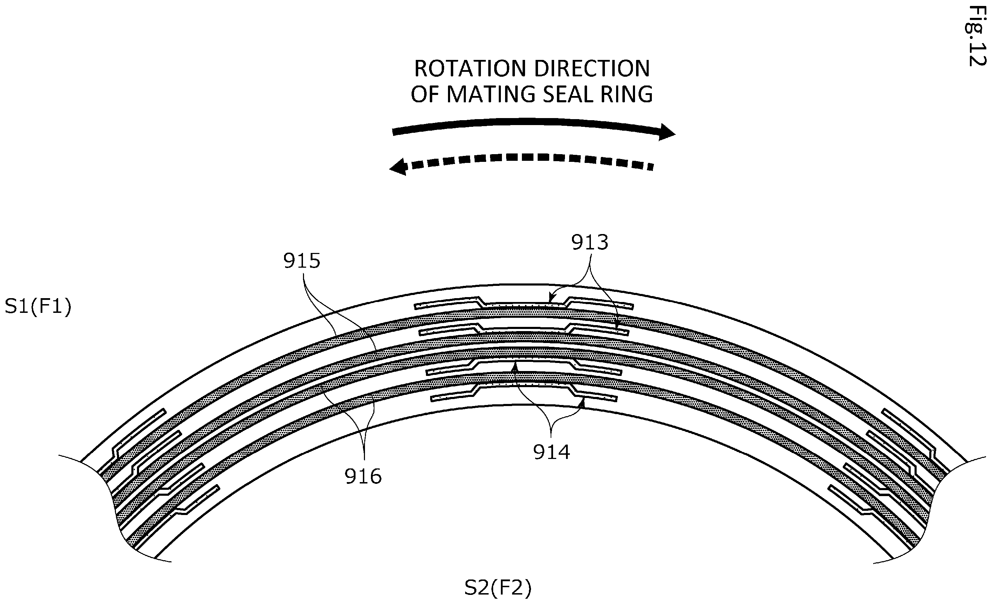

Next, a sliding component according to a ninth embodiment of the present invention will be described with reference to FIG. 12. Incidentally, the description of configurations that are the same as and overlap with the configurations of the first embodiment will be omitted.

As illustrated in FIG. 12, in the mechanical seal of the ninth embodiment, a plurality of sets (two sets in the ninth embodiment) of first dynamic pressure mechanisms 913 and first annular grooves 915 serving as first storage grooves are provided in the radial direction.

In addition, a plurality of sets (two sets in the ninth embodiment) of second dynamic pressure mechanisms 914 and second annular grooves 916 serving as second storage grooves are provided in the radial direction.

Incidentally, the number of sets of the first dynamic pressure mechanisms 913 and the first annular grooves 915 and the number of sets of the second dynamic pressure mechanisms 914 and the second annular grooves 916 can be freely changed.

### {Tenth embodiment}

Next, a sliding component according to a tenth embodiment of the present invention will be described with reference to FIG. 13. Incidentally, the description of configurations that are the same as and overlap with the configurations of the first embodiment will be omitted.

As illustrated in FIG. 13, in the mechanical seal of the tenth embodiment, first storage grooves 2815, second storage grooves 2816, and pressure release grooves 2817 serving as independent pressure release mechanisms have a C shape when viewed in the axial direction.

In this case, it is preferable that a land portion 121 provided between end portions of the adjacent first storage grooves 2815, a land portion 122 provided between end portions of the adjacent second storage grooves 2816, and a land portion 123 provided between end portions of the adjacent pressure release grooves 2817 are disposed to be shifted from each other in the circumferential direction.

Incidentally, in the tenth embodiment, the mode in which the first storage grooves 2815, the second storage grooves 2816, and the pressure release grooves 2817 have a C shape when viewed in the axial direction has been provided as an example; however, the first storage grooves 2815, the second storage grooves 2816, and the pressure release grooves 2817 may be a plurality of arcuate grooves, linear grooves, sinusoidal grooves, or the like disposed in the circumferential direction. Incidentally, the end portions of these storage grooves may have a tapered shape or the like. Namely, the storage grooves may have any shape, and the number of the storage grooves can be freely changed. In addition, it is preferable that the first storage grooves, the second storage grooves, and the pressure release grooves are provided over a range of 2/3 or more of the circumferential length of the sliding surface.

### {Eleventh embodiment}

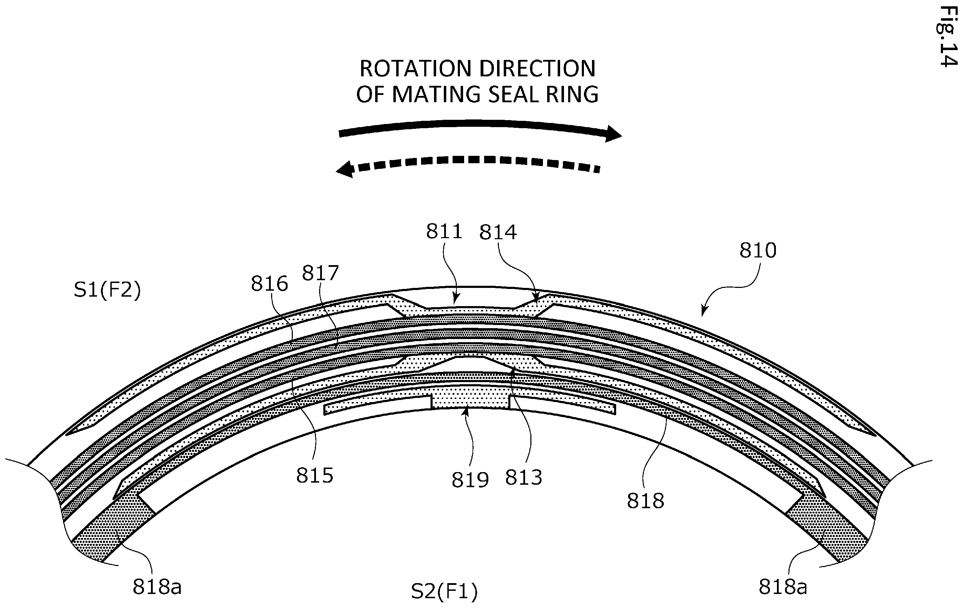

Next, a sliding component according to an eleventh embodiment of the present invention will be described with reference to FIG. 14. Incidentally, the description of configurations that are the same as and overlap with the configurations of the first embodiment will be omitted.

As illustrated in FIG. 14, in the mechanical seal of the eleventh embodiment, the first fluid F1 exists in the inner space S2, and the second fluid F2 exists in the outer space S1.

A sliding surface 811 of a stationary seal ring 810 is provided with a first pumping mechanism 813, a second pumping mechanism 814, a first annular groove 815, a second annular groove 816, a third annular groove 817 serving as a pressure release mechanism, a fourth annular groove 818, and a third dynamic pressure mechanism 819.

The third dynamic pressure mechanism 819 communicates with the inner space S2. The first pumping mechanism 813 is disposed spaced apart to the radial outer side of the third dynamic pressure mechanism 819, and the fourth annular groove 818 is provided between the first pumping mechanism 813 and the third dynamic pressure mechanism 819. The fourth annular groove 818 communicates with the inner space S2 via a plurality of communication grooves 818a.

The first annular groove 815 is provided on the radial outer side of the first pumping mechanism 813. The first pumping mechanism 813 and the first annular groove 815 communicate with each other. In addition, the third annular groove 817 is provided spaced apart from the first annular groove 815 on the radial outer side of the first annular groove 815, and the second annular groove 816 is provided spaced apart from the third annular groove 817 on the radial outer side of the third annular groove 817.

The second pumping mechanism 814 is provided on the radial outer side of the second annular groove 816. The second pumping mechanism 814 and the second annular groove 816 communicate with each other.

According to this configuration, when the rotating seal ring 20 rotates relative to the stationary seal ring 810, the third dynamic pressure mechanism 819 can generate a dynamic pressure using the first fluid F1, and the sliding surfaces can be made spaced apart from each other.

The embodiments of the present invention have been described above with reference to the drawings; however, the specific configurations are not limited to the embodiments, and changes or additions that are made without departing from the scope of the present invention are included in the present invention.

For example, in the first to eleventh embodiments, the mechanical seal has been described as an example of the sliding component; however, the present invention may be applied to other mechanical seals for general industrial machines, automobiles, water pumps, or the like. In addition, the present invention is not limited to the mechanical seal, and may be applied to sliding components other than the mechanical seal, such as a slide bearing.

In addition, in the seventh, eighth, tenth, and eleventh embodiments, the mode in which the pressure release mechanism is provided in the land portion between the first storage groove and the second storage groove on the radial inner side has been described as an example; however, the configuration of the pressure release mechanism may be omitted. In addition, two or more pressure release mechanisms may be provided in the land portion. In addition, the pressure release mechanism is not limited to an endless annular groove such as an annular groove, but may have a dashed line shape or an arcuate shape.

In addition, the first dynamic pressure mechanism and the second dynamic pressure mechanism may communicate with the first fluid space and the second fluid space.

In addition, in the first to eleventh embodiments, the mode in which in the first dynamic pressure mechanism and the second dynamic pressure mechanism, a slight positive pressure is generated on end side and a slight relative negative pressure is generated on the other end side has been provided as an example; however, a positive pressure or a relative negative pressure may not be generated as long as the flows of the first fluid and the second fluid are formed in the first dynamic pressure mechanism and the second dynamic pressure mechanism.

In addition, the configuration of the third dynamic pressure mechanism may be omitted. Particularly, when the sliding surfaces can be made spaced apart from each other by a positive pressure generated by at least one of the first dynamic pressure mechanism and the second dynamic pressure mechanism, the configuration of the third dynamic pressure mechanism may be omitted.

In addition, the numbers of the first dynamic pressure mechanisms and the second dynamic pressure mechanisms may be freely changed.

In addition, in the first to eleventh embodiments, the mode in which the depth of the first annular groove and the second annular groove is constant has been provided as an example; however, a step or an inclined surface may be formed on a bottom surface of each annular groove.

In addition, in the first to eleventh embodiments, the mode in which the depth of the first annular groove and the second annular groove is deeper than the depth of the first dynamic pressure mechanism and the second dynamic pressure mechanism has been provided as an example; however, the depth of the first annular groove and the second annular groove may be the same as the depth of the first dynamic pressure mechanism and the second dynamic pressure mechanism, or may be shallower than the depth of the first dynamic pressure mechanism and the second dynamic pressure mechanism. Incidentally, it is preferable that at least the first annular groove and the second annular groove are deeper in depth than the first dynamic pressure mechanism and the second dynamic pressure mechanism.

In addition, in the first to eleventh embodiments, the mode in which the pressure release mechanism having a circular annular shape is provided between the third dynamic pressure mechanism and the first dynamic pressure mechanism has been provided as an example; however, the pressure release mechanism may have any shape that partitions the third dynamic pressure mechanism and the first dynamic pressure mechanism off from each other, and may be, for example, a dashed annular groove, an arcuate groove, or the like.

In addition, the circumferential groove such as an annular groove or an arcuate groove may not be provided between the third dynamic pressure mechanism and the first dynamic pressure mechanism.

In addition, in the first to eleventh embodiments, the mode in which the third dynamic pressure mechanism is provided on a first fluid space side and generates a dynamic pressure using the first fluid has been provided as an example; however, the third dynamic pressure mechanism may be provided on a second fluid space side, and may generate a dynamic pressure using the second fluid, or the third dynamic pressure mechanisms may be provided on both the first fluid space side and the second fluid space side, and may generate a dynamic pressure using the first fluid and the second fluid.

In addition, in the first to eleventh embodiments, the mode in which the first fluid is oil and the second fluid is water has been provided as an example; however, the first fluid and the second fluid may be freely changed as long as the first fluid and the second fluid are different fluids. Incidentally, the first fluid and the second fluid are not limited to liquids, and may be gas or a mist mixture of liquid and gas.

In addition, in the first to eleventh embodiments, the mode in which the first fluid F1 is at a higher pressure than the second fluid F2 has been provided as an example; however, the first fluid F1 may be at a lower pressure than the second fluid F2, or may be at substantially the same pressure.

In addition, in the first to eleventh embodiments, the mode in which various grooves are formed on the sliding surface of the stationary seal ring and the sliding surface of the rotating seal ring is a flat surface has been provided as an example; however, the present invention is not limited thereto, and various grooves may be formed on the sliding surface of the rotating seal ring, and the sliding surface of the stationary seal ring may be a flat surface, or various grooves may be formed on the sliding surfaces of the stationary seal ring and the rotating seal ring.

In addition, the shapes of the first dynamic pressure mechanism, the second dynamic pressure mechanism, and the third dynamic pressure mechanism can be freely changed. For example, a spiral groove, a Rayleigh step, a herringbone shape, or the like may be employed.

### {REFERENCE SIGNS LIST}

- A: Stationary seal ring (sliding component)
- A1: Sliding surface
- A3: First pumping mechanism (first dynamic pressure mechanism)
- A4: Second pumping mechanism (second dynamic pressure mechanism)
- A5: First annular groove (first storage groove)
- A6: Second annular groove (second storage groove)
- B31: First groove (first direction groove)
- B32: First reverse groove (second direction groove)
- B41: Second groove (first direction groove)
- B42: Second reverse groove (second direction groove)
- C9: Third dynamic pressure mechanism
- D7: Third annular groove (pressure release mechanism)
- F1: First fluid
- F2: Second fluid
- S1: Outer space (first fluid space)
- S2: Inner space (second fluid space)

## Claims

1. A sliding component in which sliding surfaces of a pair of sliding rings rotate relative to each other and which partitions a first fluid space and a second fluid space off from each other,
wherein at least one of the sliding surfaces includes:
a first storage groove provided on a first fluid space side, and extending in a circumferential direction;
a second storage groove provided spaced apart from the first storage groove in a radial direction on a second fluid space side of the first storage groove, and extending in the circumferential direction;
a first dynamic pressure mechanism provided on the first fluid space side of the first storage groove, and being shallower in depth than the first storage groove; and
a second dynamic pressure mechanism provided on the second fluid space side of the second storage groove, and being shallower in depth than the second storage groove.

2. The sliding component according to claim 1,
Wherein, in at least one set of a combination of the first dynamic pressure mechanism and the first storage groove and a combination of the second dynamic pressure mechanism and the second storage groove, the dynamic pressure mechanism and the storage groove communicate with each other.

3. The sliding component according to claim 1,
wherein at least one of the first storage groove and the second storage groove has an annular shape.

4. The sliding component according to claim 1,
wherein at least one of a closed end of the first dynamic pressure mechanism which is inclined toward the first fluid space side, and a closed end of the second dynamic pressure mechanism which is inclined toward the second fluid space side, is formed.

5. The sliding component according to claim 2,
wherein at least one of a closed end of the first dynamic pressure mechanism which is inclined toward the first fluid space side, and a closed end of the second dynamic pressure mechanism which is inclined toward the second fluid space side, is formed.

6. The sliding component according to any one of claims 1 to 5,
wherein at least one of the first dynamic pressure mechanism and the second dynamic pressure mechanism includes a first direction groove extending toward a first side in the circumferential direction, and a second direction groove extending toward a second side opposed to the first side in the circumferential direction.

7. The sliding component according to claim 6,
wherein the first direction groove and a second direction groove communicate with each other.

8. The sliding component according to claim 1,
wherein a third dynamic pressure mechanism is provided on at least one of the first fluid space side of the first dynamic pressure mechanism and the second fluid space side of the second dynamic pressure mechanism.

9. The sliding component according to claim 1,
wherein an independent pressure release mechanism is provided between the first storage groove and the second storage groove.

10. The sliding component according to claim 1,
wherein at least one of the first storage groove and the second storage groove has a circular annular shape.

11. The sliding component according to claim 1,
wherein a plurality of the first dynamic pressure mechanisms are provided on the first fluid space side, and the first storage groove is provided to correspond to each of the first dynamic pressure mechanisms, and
a plurality of the second dynamic pressure mechanisms are provided on the second fluid space side, and the second storage groove is provided to correspond to each of the second dynamic pressure mechanisms.
